# EUROPÄISCHE PATENTSCHRIFT

(11) **EP 2 142 704 B1**
(45) Veröffentlichungstag und Bekanntmachung des Hinweises auf die Patenterteilung: **29.02.2012**
(21) Anmeldenummer: 08748772.4
(22) Anmeldetag: 23.04.2008
(51) Int. Cl.: E01B 7/24

(54) **WÄRMEÜBERTRAGEREINHEIT ZUR BEHEIZUNG VON ANLAGEN UND FLÄCHEN UND WEICHENHEIZUNG**
HEAT TRANSFER UNIT FOR HEATING SYSTEMS AND SURFACES AND RAILWAY POINT HEATER
UNITÉ DE TRANSFERT DE CHALEUR POUR LE CHAUFFAGE D'INSTALLATIONS ET DE SURFACES ET SYSTÈME DE CHAUFFAGE D'AIGUILLAGES

(30) Priorität: 25.04.2007 DE 102007019508
(43) Veröffentlichungstag der Anmeldung: 13.01.2010
(73) Patentinhaber: Feldmann, Wolfgang, 22145 Hamburg (DE)
(72) Erfinder: Feldmann, Wolfgang, 22145 Hamburg (DE)
(74) Vertreter: Marcus, Matthias
(86) Internationale Anmeldenummer: PCT/DE2008/000696
(87) Internationale Veröffentlichungsnummer: WO 2008/131732

(56) Entgegenhaltungen:
- EP-A- 0 913 523
- EP-A- 1 529 880
- DE-A1- 3 305 838
- JP-A- 2001 323 428
- US-A- 4 391 425
- US-A- 5 004 190

## Beschreibung

Die Erfindung betrifft eine Wärmeübertragereinheit zur Beheizung von Anlagen und Flächen gemäß dem Oberbegriff des Anspruchs 1 sowie eine Weichenheizung mit einer Wärmeübertragereinheit gemäß dem Oberbegriff des Anspruchs 21.

In der Druckschrift EP 1 529 880 A1 und WO 2005/045134 A1 handelt es sich um eine direkt Verkehrsanlagen beheizende Erdwärmesonde, deren Wärmestrom über mindestens ein Wärmerohr von der Wärmequelle über eine Transportzone geleitet und bereits in der Transportzone weit vor Erreichen der Wärmesenken derart zur Versorgung von mehreren Wärmesenken aufgeteilt wird, dass jeweils eine Aufteilung von einem auf zwei Wärmeströme erfolgt, um eine gleichmäßige Verteilung bzw. eine Verteilung des Wärmestromes nach der jeweiligen Leistungsanforderung der angeschlossenen Wärmesenken sicherzustellen. Die Aufteilung der Wärmeströme von einem Rohr auf zwei und wird dadurch eingeschränkt, dass die Summe der Querschnitte der beiden Rohre nach der Verteilung gleich dem Querschnitt vor der Verteilung ist, also dass der Querschnitt des sondennäheren Rohres etwa gleichgroß ist wie die Summe der Querschnitte der beiden Verteilrohre ist. Dabei verhalten sich die Querschnitte der Verteilrohre proportional dem Verhältnis der Leistungsbedarfe der nachgeschalteten Wärmesenken.

Als Wärmeübertrager ist jeweils lediglich eine Platte vorgesehen, unter die bis zu drei Wärmerohre längs zum Schienenkörper wärmeleitend befestigt werden, aber nicht integriert sind. Somit sind diese Rohre kein eigenständiger Wärmeübertrager, sondern sind als an Wärmeverteilblechen wärmeleitend befestigt beschrieben.

Die gezielte Aufteilung eines Gasstromes in der Transportzone erfordert eine sehr genaue Einhaltung der errechneten geometrischen Abmessungen der Verteilrohre und deren Montage ist unter den Bedingungen, wie sie am Gleis vorherrschen, nicht möglich. Es sollen keine in den Innenraum des Rohres hineinragenden Schweiß- oder Lötnähte und auch keine hineinstehenden Grate vorhanden sein, da sie den Gasstrom und den Kondensatfluss behindern. Die in EP 1 529 880 A1 vorgeschlagene Aufteilung des großen Wärmestromes aus der Sonde auf mehrere kleinere über einen weiteren zwischengeschalteten Wärmeübertrager ist mit Temperaturverlusten verbunden, die bei der geringen vorliegenden Temperaturdifferenz nicht unbedingt vorteilhaft wäre. Die Bezeichnung Kapillarrohre in der Schrift EP 1 529 880 A1, die auf irgend eine Weise den Kapillareffekt nutzen, kann zumindest im Zusammenhang mit der Verwendung von CO₂ als Arbeitsmedium nicht gleichbedeutend sein mit Rohren kleinen Durchmessers, da bei derartig kleinen Durchmessern der Druckabfall im Rohr mit der in EP 1 529 880 A1 angegebenen Länge von bis zu 5 m so hoch ist, dass kein Gastransport mehr stattfindet. Vielmehr ist es Stand der Technik, Rohre mit Kapillarinnenstruktur und Durchmessern von 10 mm dafür einzusetzen, dass ein Kondensat in der Waagerechten zurückfließt, bis zu einer Länge von ca. 5 m sogar gegen eine leichte Steigung. Bei glatter Innenstruktur und einem Durchmesser, der keinen Druckabfall verursacht, ist ein Rückfluss eines Kondensates physikalisch nicht möglich.

Die Beheizung von Verkehrsschildern mit Erdwärme, wie sie aus der DE 40 36 729 A1 bekannt ist, erfordert nur sehr kleine Wärmemengen und lässt sich relativ einfach realisieren. Ein wesentlicher Unterschied zu der hier vorgeschlagenen Erfindung liegt in den Leistungsbereichen, die hier um die Faktoren 20 bis mehrere 100 höher liegen. Eine Leistungserhöhung des beschriebenen Verfahrens in den hier vorgesehenen Bereich ist nicht möglich. Von ebensolcher Bedeutung für die Nichtvergleichbarkeit ist die Tatsache, dass es sich um eine Verhinderung einer Sichtbehinderung durch Reif handelt. Ein weiterer grundlegender Unterschied liegt auch darin, dass in einem Verkehrsschild nur senkrechte Strecken bei der Wärmeverteilung überwunden werden müssen und nur senkrechte Flächen abgetaut werden. Dabei übernimmt die Schwerkraft die wesentliche Aufgabe, den Niederschlag, Schnee, Eisregen oder Reif in nur angetautem Zustand abgleiten zu lassen. Das beheizte Verkehrsschild zeigt zwar eine Heatpipe Anwendung, die Darstellung eines mehrkanaligen Wärmeübertragers ist jedoch explizit auf Wasser/Glykol-Gemische ausgelegt. Die vorgeschlagene Ausführung mit einer so genannten Heatpipe zeigt nur ein Rohr mit einer darauf befestigten die Wärme leitenden Platte als Wärmesenke.

Bereits weit verbreitet und beispielsweise aus der DE 43 25 002 A1 bekannt sind Vorrichtungen zum Erwärmen von Weichenteilen mittels elektrischer Heizelemente, die lokal angeordnet sind und einen Betrieb der Weiche auch bei tiefen Temperaturen unter dem Gefrierpunkt gewährleisten sollen.

Der Erfindung liegt die Aufgabe zugrunde, eine Wärmeübertragereinheit zu entwickeln, die den speziellen Anforderungen eines Einsatzzwecks angepasst ist und dabei eine effiziente und wirtschaftliche Lösung darstellt.

Die Erfindung wird bezüglich einer Wärmeübertragereinheit durch die Merkmale des Anspruchs 1 und bezüglich einer Weichenheizung durch die Merkmale des Anspruchs 21 wiedergegeben. Die weiteren rückbezogenen Ansprüche betreffen vorteilhafte Aus- und Weiterbildungen der Erfindung.

Die Erfindung schließt die technische Lehre bezüglich einer Wärmeübertragereinheit zur Beheizung von Anlagen und Flächen ein, die zumindest an eine mit einem mehrphasigen Arbeitsmedium betriebene Erdwärmesonde als Wärmequelle sowie an ein zu beheizendes Bauteil anschließbar ist und aus zumindest einem Wärmeübertrager und Transportleitungen für das gasförmige bzw. flüssige Arbeitsmedium besteht. Erfindungsgemäß ist zur Übertragung der aus der Wärmequelle stammenden Latentwärme aus dem erwärmten gasförmigen Anteil des Arbeitsmediums auf das zu beheizende Bauteil zumindest ein gasdichter Wärmeübertrager modulartig mit einer Vielzahl von unmittelbar benachbarten, je nach Leistungsanforderung, Minikanälen in flächenhafter Anordnung ausgebildet, die mit zumindest einem Versorgungskanal in Verbindung stehen und die Minikanäle einen Durchmesser von 0,3 bis 6 mm aufweisen.

Der als untere Grenze vorgesehene Durchmesser der Minikanäle grenzt sich gegenüber der Dimension von Mikrokanälen ab, für die in der Literatur < 0,3 mm als Durchmesser angegeben wird. Als Dimension eines Minikanals ist als Literaturwert oft der Bereich zwischen 0,3 mm und 3 mm Durchmesser angegeben. Bei größeren zu erwärmenden Flächen können die Durchmesser der Minikanäle in diesem Zusammenhang auch bis zu 6 mm betragen. Auch bei diesen Durchmessern sind die Kanäle in das zu erwärmende Bauteil integriert, somit ist das zu erwärmende Bauteil selbst der Wärmeübertrager.

Es sind zwei Varianten von Wärmeübertragern möglich, das Gleichstromprinzip und das Gegenstromprinzip.

Für beide Prinzipien gilt, der angestrebte spezifische Leistungsbereich der Wärmeübertragereinheit liegt bei einer Temperatur des Arbeitsmediums von 7 °C im Wärmeübertrager zwischen 0,4 und 4 kW/m².

Um die Kanaloberfläche und damit die Wärmeübergangsfläche Gas zu Wärmeübertrager zu vergrößern, können mehrere Schichten von Kanälen, unter Einhaltung des aus mechanischen Gründen (Festigkeit) einzuhaltenden Mindestabstandes der Kanäle zueinander, übereinander angeordnet werden. Mit dieser Maßnahme kann auch ein noch schnelleres Ansprechen der Heizung erreicht werden.

Für das Gegenstromprinzip gilt: Das Verhältnis der Querschnitte der zuführenden Verteilrohre zu dem Gesamtquerschnitt der jeweils angeschlossenen Kanäle ist, je nach Leistungsanforderung der zu beheizenden Fläche und der gewählten Kanalquerschnitte zwischen 0,1 bis 0,25 zu wählen. Die Summe der Querschnitte der Minikanäle ist demnach wesentlich größer als der eines dazugehörigen Verteilrohres. Die Minikanäle haben üblicherweise eine glatte Innenwandung, um den Gas- und Flüssigkeitsstrom bestmöglich zu unterstützen.

Es kann ein Mindestdurchmesser auf der Kapillarseite von 0,3mm, ein Maximaldurchmesser bei Aluminiumwärmeübertrager, wegen der Festigkeit und Wirtschaftlichkeit (zu hohe Wandstärken) von 5mm genannt werden. Der Mindestdurchmesser sollte auch deshalb nicht unterschritten werden, um den Rücklauf des flüssigen Arbeitsmediums durch das nachströmende Gas nicht zu behindern. Ein intermittierendes Verhalten des Mediums kann sich bereits bei 1 mm Durchmesser und hoher Leistung einstellen.

Auf der Verteilerseite sollten die Maximaldurchmesser 20mm nicht überschreiten. Das Produktsicherheitsgesetz setzt bei wesentlich größeren Durchmessern Grenzen bei Fertigungsüberwachung und verlangt häufige Sicherheitsprüfungen. Das Gesetz greift Überschreiten von Grenzwerten aus dem Produkt aus Druck und Volumen eines Behälters. Darüber hinaus werden die Wandstärken dann unwirtschaftlich dick.

Bei Verwendung von CO₂ sind die Abmessungen der Verteilrohre und der Minikanäle bei für diese Anwendungen geforderten Leistungen (< 2 kW je m² und Verteilrohr) weitgehend unkritisch. Der hohe Enthalpiegehalt des CO₂ bedingt niedrige Strömungsgeschwindigkeit. Ein metallischer Wärmeübertrager führt durch seine gute Wärmeleitfähigkeit die Latentwärme des Gases gut ab, weshalb quasi ein Sogeffekt entsteht, der sogar ungleiche Kapillarrohrquerschnitte erlaubt ohne das dies zu kritischen Leistungsverlusten führt.

Werden die Leistungsanforderungen überproportional zum Querschnitt der Kanäle gesteigert, kann es zu einem Kondensatstau kommen, d.h. das abfließende Kondensat behindert den Zustrom von gasförmigem Medium, so dass ein leistungsminderndes intermittierendes Verhalten der Wärmeübertragung einsetzt.

Für das Gleichstromprinzip können die Querschnitte der Verteilrohre und Kanäle kleiner gewählt werden.

Für die Anwendung in Weichenheizungen werden Module von 25 W bis 200 W vorgeschlagen. Die Abmessungen richten sich nach der Weichenbauart und geforderter Schneeschmelzleistung und können eine Beheizung der Gleitstühle beinhalten.

Die Erfindung geht dabei von der Überlegung aus, eine Wärmeübertragereinheit zur Nutzung, Sammlung und Verteilung von Niedertemperaturwärme anzugeben, welche bevorzugt aus einer Erdwärmesonde stammt, die mit einem flüssig-gasförmigen Arbeitsmedium betrieben wird. Als Wärmequelle eignet sich bevorzugt die Nutzung der Latentwärme eines Arbeitsmediums auch bei einem nur geringen Temperaturgefälle zwischen dem Phasenwechselpunkt des Arbeitsmediums und dem Gefrierpunkt von Wasser, wobei sich die übertragbare Leistung an der Wärmesenke maximieren und die Effizienz wesentlich verbessern lässt.

Der Wärmeübertrager ist so konzipiert, dass bevorzugt Erdwärme eines niedrigem Temperaturniveaus zur Beheizung und Temperierung derart genutzt wird dass auch bei den geringen Temperaturdifferenzen zwischen Arbeitsmedium und Wärmesenke, wie sie vorliegen, wenn durch keine zwischengeschaltete Wärmepumpe das Temperaturniveau des Arbeitsmediums angehoben wird, eine große Wärmemenge auf begrenzter Fläche übertragen werden kann, also eine hohe Energiedichte erreicht wird.

Es ist zu erwarten, dass bis zu 95% der aus der Sonde entnommenen Wärme nicht zum Schmelzen von Schnee oder Eis genutzt werden, sondern, dass erhebliche Wärmemengen durch Konvektion bei Temperaturen unter 10°C und durch Abstrahlung gegen den klaren Himmel abgeführt werden.

Zur Steuerung der Wärmeentnahme aus der Wärmequelle wird daher durch die Erfindung eine Minimierung der unkontrollierten Wärmeentnahme durch Gestaltung der Oberfläche des Wärmeübertragers passiv erreicht. Dies geschieht durch die Gestaltung der Oberfläche und/ oder die Materialwahl des Wärmeübertragers.

Zusätzlich kann mittels einer temperaturabhängigen Regelung der Fluss des Arbeitsmediums gemindert oder sogar unterbrochen werden. Die wird bevorzugt dadurch erreicht, dass an wind- und abstrahlungsgeschützter Position ein temperaturgesteuerter Aktor den Wärmeübertrager einseitig oder das Zuflussrohr um ein geringes Maß dermaßen anhebt, dass der Rückfluss des Mediums unterbrochen wird.

Eine wesentliche Neuerung der Erfindung gegenüber bekannten Lösungen betreffen Verbesserungen der Effizienz der Kernkomponenten, besonders bezüglich der Wärmeverteilung, die auch in anderen Anwendungen einsetzbar sind und die effektive Niedertemperaturnutzung für diese Anwendungen überhaupt erst ermöglichen. Mit der Erfindung wird die Effizienz bisher gekannter Lösungen bezüglich Leistung, Materialeinsatz und Wirtschaftlichkeit übertroffen. Des Weiteren werden zusätzliche Komponenten systemseitig vorgeschlagen, wie beispielsweise die Integration von Wärmespeicher und zusätzlichen Wärmequellen oder eine zusätzliche Integration von Wärmespeicher in die Wärmeübertrager selbst.

Wärmeübertrager in Mikrostruktur unterscheiden sich von anderen Wärmeübertragern durch ihre hohe Leistungsdichte. Bevorzugt sind, abhängig von der geforderten Leistung und der daraus folgenden gesamten Kanaloberfläche die sich aus der gesamten Kanallänge und dem Kanalquerschnitt ergibt, 2 bis etwa 100 Kanäle pro 10 Zentimeter Übertragerbreite angeordnet. Der Wärmeübertrager arbeitet bei nur kleiner Temperaturdifferenz und um den Kondensationspunkt des Arbeitsmediums, wobei die Betriebspunkte beider Fluidphasen nahe eines ihrer Phasenwechselpunkte liegen. Insbesondere die Kombination eines erfindungsgemäßen Wärmeübertragers in Mikrostruktur in Verbindung mit einer Erdwärmenutzung bietet als Gesamtsystem betrachtet seitens der Systemintegration, Zuverlässigkeit im Betrieb und der Wartungsfreiheit besondere Vorteile.

Die Wärmeübertragereinheit dient insbesondere zur Beheizung von Verkehrsflächen, Verkehrswegen und Verkehrsanlagen. In diesem Zusammenhang eignet sich die Wärmeübertragereinheit besonders für Bahnanlagen, insbesondere für Weichen sowie als Wärmeübertrager ausgebildeten Bahnübergangssegmenten, Bahnsteigssegmenten und ähnlichen als Wärmeübertrager ausgebildeten Einheiten, da die erfindungsgemäße Lösung ohne zusätzliche, mit Fremdenergie angetriebene Pumpen und ohne bewegte Teile betrieben werden kann. Die Wärmeübertrager sind jeweils an eine oder mehrere Versorgungsleitungen bevorzugt zerstörungsfrei lösbar anschließbar.

Für Beheizungen von Verkehrsanlagen, wie Eisenbahnweichen, und die Schnee- und Eisfreihaltung und damit die Sicherheit in gefahrträchtigen Bereichen wie Bahnsteigkanten, Bahnübergängen oder schienengleichen Straßenkreuzungen erhöhenden Anwendungen, kann damit auf den Einsatz von beispielsweise elektrischer Heizung oder die Verwendung abstumpfender oder den Schmelzpunkt des Schnees absenkender Mittel verzichtet werden.

Darüber hinaus können die Strömungs- und Druckverluste im Wärmeübertrager bezüglich der gegenseitigen Behinderungen zwischen der Gasphase und dem in die Wärmequelle zurücklaufenden Kondensat minimiert werden.

Der besondere Vorteil besteht darin, dass die erfindungsgemäße Wärmeübertragereinheit eine den heutigen Stand übertreffende Effizienz bezüglich Wärmenutzung, Materialeinsatz und Wirtschaftlichkeit aufweist. Die Effizienz bezüglich der Wärmenutzung ergibt sich aus der optimierten Wärmeabgabe der über einen Temperaturgradienten abfließenden Wärme.

In bevorzugter Ausführungsform der Erfindung können im Wärmeübertrager die Minikanäle bei besonders hohem Wärmebedarf auf mehreren Ebenen angeordnet sein. Um eine für die vorgesehenen Zwecke notwendige Wärmemenge bei der geringen Temperaturdifferenz übertragen zu können ist die Wärmeübertragungsfläche auf der Seite des Arbeitsmediums zu maximieren. Dieser Wärmeübertrager wird in einer oder, je nach Energiebedarf in mehreren Ebenen von vielen parallel verlaufenden Kanälen, bevorzugt jedoch 2 bis 100 Kanäle pro 10 Zentimeter Übertragerbreite und pro Ebene, durchzogen. Der Kanaldurchmesser liegt bevorzugt zwischen 0,5 mm und 5 mm. Dadurch wird die Übertragungsfläche vom Arbeitsmedium zum Wärmeübertrager und somit die mögliche Energiedichte maximiert. Gleichzeitig wird hier aber die Oberfläche gegen die Umgebung so klein wie möglich gehalten, um die Abstrahlverluste an die Umgebung zu minimieren. Bei der Materialwahl des Wärmeübertragers werden eine gute Leitfähigkeit sowie eine hohe Korrosionsbeständigkeit angestrebt.

Auf diese Weise kann der Wärmeübertrager einen sogenannten Plattenwärmeübertrager in Mikrostruktur darstellen, der nach dem Microchannel-Prinzip je nach verwendetem Arbeitsmedium, bevorzugt jedoch CO₂, und Einsatzzweck optimiert zur Anwendung kommt.

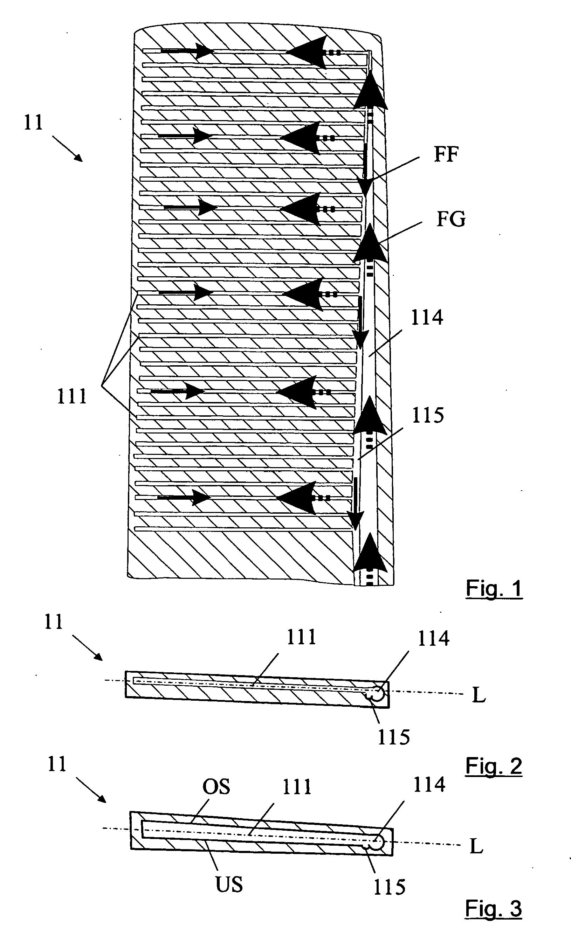

Eine Ausbildung der Einströmverhältnisse, wie in den Wärmeübertragern gezeichnet, ist bei Verwendung von CO₂ als Arbeitsmedium nur bei extremen Leistungsanforderungen notwendig, da bei einfacher Abzweigung der Kanäle vom Verteilrohr die Temperaturdifferenz im Wärmeübertrager zu optimierten Einströmverhältnissen nur wenige Zehntel Grad beträgt. Es genügt die Ausführung aus Fig. 1 oder Fig. 3. Eine Aufweitung der Kapillaren ist bei CO₂ auch bei Gegenstromwärmeübertragern nicht notwendig, wenn die genannten Mindestdurchmesser der Kanäle eingehalten werden und die Leistung. eine Abgabeleistung von 5kW/m² nicht übersteigt.

Vorteilhafterweise können, um den Rückfluss des Kondensates in Gegenstromwärmeübertragem zu verbessern, die geschlossenen "Enden" der Kanäle nach oben gebogen werden. Damit wird erreicht, dass das Kondensat aus diesem Bereich mit einem Impuls versehen wird und den Rückfluss insgesamt verbessert. Dies ist besonders bei längeren Kanälen vorteilhaft, wie sie bei Bahnsteigkantenheizungen oder Bahnübergangsheizungen vorkommen können.

Vorteilhafterweise kann die obere Scheitellinie eines Minikanals von der Eintrittsstelle des gasförmigen Anteils des Arbeitsmediums ausgehend abschnittsweise sowohl ansteigend als auch abfallend verlaufen. Der Transportmechanismus des gasförmigen Mediums beruht auf Druckgradienten, die aufgrund der Volumenverringerung des gasförmigen Arbeitsmediums durch Kondensation entstehen. Die Führung des gasförmigen Mediums ist im Grunde unabhängig von der räumlichen Führung der Kanäle.

Insbesondere kann jedoch vorteilhafterweise die obere Scheitellinie eines Minikanals von der Eintrittsstelle des gasförmigen Anteils des Arbeitsmediums ausgehend ansteigen. Hierdurch wird der gasförmige Anteil des Arbeitsmediums im Minikanal insgesamt besser geführt.

Weiterhin kann vorteilhafterweise die untere Scheitellinie eines Minikanals bzw. eines Kanalabschnittes in Richtung der Austrittsstelle des flüssigen Anteils des Arbeitsmediums geneigt sein. Hierdurch wird ein verbesserter Kondensatabfluss gewährleistet, denn die Rückführung des flüssigen Arbeitsmediums wird in erster Linie durch die Gravitation verursacht. Um das Kondensat sicher abzuführen, sollten die Kanäle in Fließrichtung in Regelfall eine ausreichende aber dennoch möglichst geringe Neigung und einen dem verwendeten Fluid angepassten Querschnitt aufweisen. Durch seine sehr geringe Viskosität können bei dem bevorzugt vorgesehenen Fluid CO₂ sehr geringe Neigungen und Querschnitte gewählt werden.

In bevorzugter Ausgestaltung der Erfindung kann sich ein Minikanal entlang der Längsachse aufweiten. Dies kann auch konisch sein. Ist ein Wärmeübertrager waagerecht oder nahezu waagerecht eingebaut, dessen Wärmezufuhr über ein gasförmiges Arbeitsmedium erfolgt und überwiegend die latent gespeicherte Wärme genutzt wird, kann das Problem auftreten, dass durch ein geringes Gefälle der Rückfluss des Kondensates nur wenig unterstützt wird und weitere störende Einflüsse eliminiert werden sollten. Als eine Maßnahme zur Verbesserung des Rückflusses wird vorgeschlagen, den Wärmeübertrager so zu gestalten, dass zumindest der Zustrom des Gases in den Wärmeübertrager den Rückfluss des Kondensates nicht oder nur minimal behindert.

In bevorzugter Ausführungsform kann sich der Zuführkanal in Fließrichtung des gasförmigen Fluids entlang der Längsachse verjüngen. Dies kann konisch sein. Eine derartige Querschnittsverengung trägt dem Umstand Rechnung, dass durch die Verteilung auf die einzelnen Minikanäle einem Zuführkanal in Flussrichtung ständig gasförmiges Arbeitsmedium entzogen wird.

Vorteilhafterweise kann sich der Abführkanal in Fließrichtung des Fluids entlang der Längsachse L aufweiten. Eine derartige Querschnittserweiterung trägt dem Umstand Rechnung, dass aus den einzelnen Minikanälen in Flussrichtung den Abführkanälen ständig flüssiges Arbeitsmedium hinzutritt.

Vorteilhafterweise können Zuführkanal und Abführkanal auf einer Seite der Minikanäle als ein Versorgungskanal ausgebildet sein oder Zuführkanal und Abführkanal können voneinander beabstandet angeordnet sein. Hierdurch können, je nach den konstruktiven Anforderungen, die Länge und Effizienz der Zuleitungs- oder Ableitungswege optimiert werden.

Es besteht bei der Ausführung mit den Anschlüssen an unterschiedlichen Seiten praktisch keine gegenseitige Behinderung, da im Minikanal der Gasstrom oberhalb des Kondensatabflusses verläuft und dies nicht gegenläufig, sondern in derselben Richtung.

Es ist auch möglich, dass der Kondensatrückfluss im Verlauf eines Kanals angeordnet wird. In diesem Fall ist der Querschnitt bis zum Abfluss wachsend. Der Steigungswinkel der oberen Mantellinie gegen die Waagerechte ist über die gesamte Länge positiv, also in Strömungsrichtung nach oben gerichtet. Der Winkel der unteren Mantellinie bis zum Abfluss negativ, also in Strömungsrichtung der Schwerkraft folgend nach unten gerichtet. In dieser Ausführung kann der Steigungswinkel des Abschnitts ab dem Abfluss bis zum geschlossenen Ende mit veränderter, bevorzugt größerer Steigung ausgeführt werden. Dies bewirkt, dass das rückfließende Kondensat beschleunigt wird und leichter mit der dadurch eingetragenen kinetischen Energie eventuelle waagerechte Abschnitte im Verlauf überwindet.

Durch die Anordnung von Abfluss und Zustrom, der Abfluss liegt in jedem Fall tiefer als der Zustrom, wird verhindert, dass Gas, ohne die enthaltene latente Wärme abgegeben zu haben, entweicht. Gleichzeitig blockiert das abfließende Kondensat einen möglichen ungewollten Gaszustrom auf der Ausgangsseite. Weiter wird durch diese Anordnung erreicht, dass der Rücklauf parallel in einem gesonderten Rohr, vom Gasstrom getrennt in das Sondenrohr, sinnvollerweise nicht weiter als bis an die Grenze zwischen Transport- und Wärmeaufnahmezone zurückgerührt werden kann.

Wird der gesamte Wärmeübertrager mit einer leichten Neigung eingebaut, so ist zu beachten, dass sich die Einbauneigung und die Neigung der Kanäle zumindest nicht vollständig kompensieren, sondern möglichst ergänzen.

Das erfolgt dadurch, dass die einzelnen Kanäle des Wärmeübertragers leicht konisch ausgeführt sind, wobei die Ausführung mit beiden Anschlüssen, Gaszuführung und Kondensatablauf an derselben Seite und den Anschlüssen, Gaszuführung und Kondensatablauf, an unterschiedlichen Seiten, bevorzugt an gegenüberliegenden Seiten, unterschieden wird. Sind beide Anschlüsse an einer Seite, so befindet sich das aufgeweitete Ende an der Anschlussseite, wobei der Steigungswinkel der Längsachse des Rohres, gemessen von der Anschlussseite, zur Waagerechten größer ist, als der der oberen Rohrmantellinie, aber kleiner als der der unteren Rohrmantellinie, der kleiner 0° sein sollte. Liegen die Anschlüsse an unterschiedlichen Seiten, so befindet sich die aufgeweitete Seite des Rohres auf der Seite des Kondensatabflusses, wobei der Steigungswinkel der oberen Rohrmantellinie zur Waagerechten, gemessen von der Gaseintrittsseite, mindestens größer als 0° sein sollte. Die Steigung der Längsachse zur Waagerechten sollte negativ sein. Der Steigungswinkel muss über die Länge der Kanäle nicht gleich bleiben, d.h. er kann in den angegebenen Randbedingungen unterschiedlich sein und so beispielsweise den Einbaubedingungen angepasst werden.

Der Anschluss der Gaszuführung liegt in beiden Ausführungen höher als der des Kondensatabflusses. Eine minimierte Behinderung der Strömungen liegt bei der Ausführung mit den Anschlüssen an einer Seite vor, da der Gasstrom oberhalb des Kondensatrückflusses verläuft.

In bevorzugter Ausführungsform der Erfindung kann zwischen dem Arbeitsmedium und der äußeren Oberfläche des Wärmeübertragers zumindest partiell eine den Wärmedurchgang dämmende Schicht angeordnet sein. Ein Aluminium Wärmeübertrager kann möglicherweise eine zu gute Wärmeleitfähigkeit ausweisen, so dass die Wärmesonde unter manchen Bedingungen zuviel Wärme abgibt. Mit einer dünnen Isolationsschicht kann die Wärmeleitfähigkeit auf der Strecke vom Fluid bis zur Wärmeübertrageroberfläche um nahezu beliebige Größenordnungen reduziert werden. Der Wärmeübertrager sowie auch weitere Teile der Wärmübertragereinheit, wie beispielsweise Transportleitungen, können mit einer die Wärmeübertragung dämmenden Schicht versehen werden, damit nicht der Bereich, insbesondere in Fließrichtung gesehen unterhalb des Wärmeübertragers beheizt und unnötig die Sonde belastet wird.

Des Weiteren kann es vorteilhaft sein, wenn die vom Arbeitsmedium durchströmten Minikanäle in ein druck- und gasdichtes Gehäuse eingebracht sind, wobei die Wärmeleitwerte der Materialien der beiden Baugruppen - Kanalsystem und Gehäuse - unterschiedlich sein können. Die Herstellung der Verteilung und der Kanäle aus Kunststoff ist dabei entsprechend kostengünstig.

In bevorzugter Ausgestaltung der Erfindung kann in zumindest einer Transportleitung für den Rücklauf des flüssigen Arbeitsmediums zur Wärmequelle und/oder in zumindest einem Wärmeübertrager ein Wärmespeicher integriert sein. Hierdurch wird Umgebungswärme bzw. Wärme aus Sonneneinstrahlung gespeichert und in den Kreislauf des Arbeitsmediums eingebunden.

In bevorzugter Ausgestaltung der Erfindung kann vom Wärmespeicher eine rückführende Transportleitung zum Wärmeübertrager für das durch Wärmeaufnahme im Wärmespeicher gebildete gasförmige Arbeitsmedium angeordnet sein.

Ein Vorteil ist dabei die Reduzierung der Wärmeentnahme aus der Wärmequelle bzw. deren Regeneration. Eine weitere Minderung der Wärmeentnahme aus der Erdwärmesonde und der Verbesserung deren Regeneration kann dadurch erreicht werden. Damit wird erreicht, dass durch Nutzung von Umgebungswärme und besonders Wärme aus Sonneneinstrahlung zeitweilig die Temperatur des Arbeitsmediums an der Wärmesenke so weit erhöht wird, dass der Kreislauf des Arbeitsmediums und die Wärmeentnahme aus dem Erdreich für diesen Zeitraum unterbrochen werden. Durch diese Senkung der Betriebsstunden einer Erdwärmesonde als primäre Wärmequelle wird erreicht, dass diese kostengünstiger ausgelegt werden kann. Ist genügend Bauraum vorhanden, kann der Speicher auch mit Silikagel oder Zeolith als Speichermaterial ausgeführt werden.

In bevorzugter Ausführungsform kann eine Zusatzheizung als weitere Wärmequelle integriert sein. Hierdurch wird die Wärmeübertragereinheit auf extreme Wärmeentnahme ausgelegt.

Vorteilhafterweise kann die Oberseite eines Wärmeübertragers aus der Horizontalen zumindest leicht geneigt installierbar sein. Ist der Wärmeübertrager in einer waagerechten oder fast waagerechten Position und zu dem Zweck installiert, gefrorenen Niederschlag abzutauen, ist die Oberfläche derart zu gestalten, dass eine sichere Drainage des abgetauten Niederschlages gewährleistet ist. Auch durch diese Maßnahme wird die ungezielte Wärmeabgabe an die Umgebung gemindert.

Auf dem Wärmeübertrager stehendes Wasser würde, wegen seiner großen Wärmespeicherkapazität, erhebliche Leistung nutzlos aufnehmen. Wird hingegen verhindert, dass von Wasser, angeschmolzenem Schnee oder angeschmolzenem Eis mehr als ein dünner Feuchtigkeitsfilm auf der Oberfläche verbleibt, wird keine Wärmeleistung mehr zum weiteren Abschmelzen bzw. Erwärmen des Schmelzwassers der Wärmequelle entzogen, sondern nur noch die wesentlich geringere Wärmeleistung durch Luftströmung oder Strahlung. Die somit vorgeschlagene Oberfläche wird demnach so gestaltet, dass der darauf fallende Schnee oder Eisregen sofort möglichst vollständig geschmolzen, zumindest angeschmolzen wird und das Schmelzwasser durch eine zumindest geringe Schwerkraftkomponente von der Oberfläche abfließt, bevorzugt von einer schwach schiefen Ebene, die parallel zu den das Arbeitsmedium führenden Rohren verläuft. Für den Einsatz des Wärmeübertragers in Weichenheizungen wird als Material ein gut wärmeleitendes Material gewählt, bevorzugt Metall mit glatter Oberfläche, beispielsweise Aluminium, das gleichzeitig sehr kleine Wärmeabstrahlwerte hat. Durch diese Maßnahmen wird erreicht, dass dem Wärmeübertrager nur noch durch Konvektion, wie kalter Luftströmung, und durch die reinen Strahlungsverluste, z.B. gegen den kalten Himmel, mehr Wärme entzogen wird, als zur Schnee- und Eisfreihaltung notwendig ist. Die Strahlungs- und Konvektionsverluste werden durch die Minimierung der Wärmeübertrageroberfläche und die Materialwahl jedoch auf niedrigstmöglichem Niveau gehalten.

In bevorzugter Ausgestaltung der Erfindung kann eine im Erdreich fest installierte Erdwärmesonde durch ein dauerelastisches Verbindungselement schwingungstechnisch trennbar sein. Handelt es sich um einen Wärmeübertrager, der Schwingungen und Stoßbelastungen ausgesetzt wird, beispielsweise in Verkehrsanlagen, muss er, besonders wenn das Arbeitsmedium gasförmig ist und ein hoher Arbeitsdruck herrscht, bei Verwendung von CO₂ sind dies etwa 40 bar, von einer fest installierten Erdwärmesonde schwingungstechnisch getrennt sein und dabei über einen langen Zeitraum diesen hohen Druck halten. Dabei kann der Arbeitsdruck durch eine Druck- oder Temperaturanzeige überwacht werden.

Da an den Verkehrsanlagen und Verkehrsflächen Wartungsarbeiten durchführbar sein müssen, um auch gegebenenfalls schadhafte Teile zu ersetzen, muss bevorzugt an dem elastischen Element eine zerstörungsfreie Demontagemöglichkeit vorgesehen werden, so dass beispielsweise der Wärmeübertrager im Schadensfall oder bei Wartungsarbeiten in der Umgebung des Wärmeübertragers von der Erdwärmesonde getrennt und ausgetauscht werden kann. Da der Wärmeübertrager nicht unbedingt starr mit der zu beheizenden Fläche oder Anlage verbunden ist, kann auch seine elastische Befestigung als schwingungstechnische Entkopplung angenommen werden.

Für den Fall, dass der Wärmeübertrager nicht die zu beheizende Fläche oder Anlage ist, sondern mit ihr fest verbunden sein muss, wird zur Verbesserung des Wärmeüberganges über die Verwendung von Wärmeleitpasten hinaus vorgeschlagen, den Anpressdruck des Wärmeübertragers an die Wärmesenke durch eine Verschraubung zu erhöhen oder eine metallische Verbindung, beispielsweise Löten, vorzusehen.

Vorteilhafterweise kann das zu beheizende Bauteil selbst als Wärmeübertrager ausgebildet sein. In weiterer vorteilhafter Ausgestaltung können die Minikanäle zumindest als mittragende Elemente des zu beheizenden Bauteils ausgebildet sein. Für den Anwendungsfall, dass der Wärmeübertrager das zu beheizende Bauteil darstellt, dessen Oberfläche nicht aus Metall ausgeführt werden kann und somit die Abstrahlverluste größer sind als bei einer metallischen Oberfläche, muss der höhere Wärmeenergiebedarf in der Auslegung der Sonde berücksichtigt werden. Hier werden dafür die metallischen Rohre zumindest als mittragende Elemente des Wärmeübertragers ausgelegt.

Vorteilhafterweise kann der Wärmeübertrager mit seinen Minikanälen mittels einer Steuereinheit gegenüber der Horizontalen kippbar ausgebildet sein. Durch eine Temperatur gesteuerte Schaltung kann den Leistungsverlusten durch Abstrahlung und Konvektion entgegengewirkt werden. Dies erfolgt dadurch, dass die Neigung im Kondensatrückfluss bevorzugt in der Gegenstromausführung derart geändert werden kann, dass das Kondensat nicht mehr zurückfließen kann. Hierzu kann am Wärmeübertrager eine sich bei Temperaturwechsel ausdehnende oder zusammenziehende Steuereinheit angeordnet werden. Auf diese Weise lässt sich die Energieentnahme aus der Wärmequelle in Abhängigkeit der Umgebungstemperatur gezielt steuern. Dies wirkt einer unnötigen Wärmeentnahme aus der Wärmequelle entgegen.

Vorteilhafterweise kann zumindest eine rückführende Transportleitung mittels einer Steuereinheit angehoben werden, wodurch der Rückfluss des Kondensats verhindert wird. Diese Steuereinheit kann insbesondere unter der Kondensat-Rückleitung derart angeordnet werden, mit dem Ziel, die rückführende Transportleitung beispielsweise nur lokal anzuheben, um den Rückfluss des Kondensats zu verhindern und den Gasstrom zu unterbrechen. Hier würde der Wärmeübertrager nicht notwendigerweise kippbar ausgebildet werden müssen.

In bevorzugter Ausgestaltung der Erfindung als Weichenheizung kann zumindest ein Wärmeübertrager zumindest in einem Gleitstuhl, im Verschlussfach, im Bereich der Weichenzunge am Schienensteg und/oder am Schienenfuß der Weiche integriert sein.

Die Wärmeübertrager werden derart installiert, dass sie im einfachsten Fall ein so genanntes Schwellenfach in einer Breite von etwa dem Stellweg der Weichenzunge und etwa auf der halben Breite des inneren Schienenfußes liegend, längs überdecken. Wird der Wärmeübertrager zusätzlich für die Beheizung der benachbarten Gleitstühle eingesetzt, so wird durch ausreichenden Anpressdruck an die Gleitstühle, eine ausreichende Wärmeübertragung der erforderlichen Wärmemenge je Zeiteinheit gewährleistet.

Die Schwellen eines Gleises verändern während der Liegezeit, durch die auftretenden Lastkollektive ihre Lage. Dabei sind für den Einsatz von Wärmeübertragern insbesondere die Verschiebungen in Längsrichtung von Bedeutung, weil sich durch sie der Einbauraum der Wärmeübertrager verändert.

Vorteilhafterweise kann zumindest ein Wärmeübertrager in einem Gleitstuhl der Weiche integriert sein. Die Beheizung von einem Gleitstuhl einer Weiche ebenso wie von dem Schienenkopf ist durch die erfindungsgemäße Lösung möglich. Für den Fall, dass es erforderlich ist, zwei oder mehrere Wärmeübertrager, die aus einer Wärmequelle mit Arbeitsmedium versorgt werden, hintereinander zu schalten, muss die Verbindung ein elastisches Glied enthalten, damit gegenläufige Bewegungen ausgeglichen werden und nicht zur Zerstörung der Wärmeübertrager führten.

Oft entsteht durch eine federnd gelagerte Verbindung eine Vorspannung. Die Vorspannung wird derart gewählt, dass bei allen Positionen zwischen minimaler und maximaler Lageänderung der Schwellen, ein ausreichender Anpressdruck an die jeweils begrenzenden Gleitstühle besteht.

Für die Beheizung eines Gleitstuhles in Weichen ist es wichtig, diesen mit einem Wärmeübertrager wärmeleitend zu verbinden. Alternativ, besonders bei höheren Anforderungen an die Heizleistung, werden Gleitstühle vorgeschlagen, in die ein Wärmeübertrager integriert ist. Dies kann als herausnehmbare Platte ausgebildet sein oder die Minikanäle werden in beispielsweise gefrästen oder geschmiedeten Nuten unter oder auf dem Gleitstuhl geführt. Eine weitere Möglichkeit ist, Gleitstuhl und Wärmeübertrager als ein Bauteil auszubilden.

Vorteilhafterweise kann zumindest ein Wärmeübertrager im Bereich der Weichenzunge am Schienensteg und/oder am Schienenfuß angeordnet sein.

Um ein mögliches Festfrieren der Weichenzunge an der Backenschiene zu verhindern, wird eine Beheizung durch den entsprechenden Wärmeübertrager mit Führung an den Schienensteg und in Querrichtung zur Schiene verlaufenden Kanälen vorgeschlagen. Die Befestigung des Wärmeübertrager und Erhöhung des Anpressdruckes durch Schrauben, bevorzugt mit einer Bohrung durch die neutrale Faser des Schienensteges. Bei erhöhten Wärmeanforderungen kann ein zusätzlicher Wärmeübertrager an der äußeren Kehle des Schienenprofils unterhalb des Schienenkopfes angeordnet werden.

Bei Leistungen von ca. 120W je Seite und Schwellenfach ist eine ausreichende Schmelzleistung sogar für Schneefälle von mehr als 10 cm/h vorhanden. Es ist anzunehmen, dass bis zu etwa 95 % der Leistungsabgabe ist nicht durch Schmelzleistung, sondern durch Abstrahlung und Konvektion bedingt ist. Deshalb ist eine Minimierung der nicht zum Schmelzen genutzten Leistung sinnvoll und wirtschaftlich.

Ebenso, um dort Abstrahlung und Konvektion zu vermindern, kann der Steg und der Fuß der Backenschiene nach außen, wenn die Konstruktion der Weiche es zulässt auch der Steg nach innen, thermisch isoliert werden. Die Isolierung kann am Schienenfuß befestigt werden und umschließt an der Außenseite den eventuellen zusätzlichen Wärmeübertrager in der äußeren Kehle des Schienenprofils.

Wärmeübertrager die nicht den Gleitstuhl oder den Schienenkopf beheizen sollen, werden mit Klammem am Schienenfuß befestigt und liegen auf den Schwellen auf. Sie können auch zusätzlich an einer Schwelle befestigt werden. Diese Wärmeübertrager werden in ihren Abmessungen so bemessen, dass im einen Extremfall, Vergrößerung des Schwellenabstandes, die Wärmeübertrager nicht zwischen die Schwellen fallen, im anderen Extremfall, Verringerung des Schwellenabstandes, die Wärmeübertrager nicht von den Gleitstühlen beschädigt werden. Vorteilhafterweise kann zumindest ein Wärmeübertrager zudem auch im Verschlussfach der Weiche integriert und/oder als Abdeckung des Verschlussfaches ausgebildet sein.

In weiterer bevorzugter Ausgestaltung der Erfindung als Weichenheizung kann die Wärmeübertragereinheit an den Auflagepunkten an der Weiche mit verformbaren Elementen gelagert sein. Werden die Wärmeübertrager im Eisenbahnwesen zur Beheizung von Weichen, deren Schnee- und Eisfreihaltung eingesetzt, so ist die vorgeschlagene Technologie den erschwerten Erfordernissen anzupassen. So sind die Wärmeübertrager derart auszulegen, dass eine Längenänderung des Einbauraumes keinen Einfluss auf die Funktion und Betriebssicherheit hat und nicht zur Zerstörung des Wärmeübertragers führt.

Ist der Wärmeübertrager derart gestaltet, dass es sich um ein Bauteil handelt, dass jeweils auf einer Schwelle montiert ist und auf jeweils deren beiden Seiten ein etwa halbes Schwellenfach abdeckt und beheizt, lässt sich der Aufwand zur Schwingungsentkopplung und zur Kompensation der Längenänderung des Einbauraumes zum nächsten Wärmeübertrager minimieren.

Die erfindungsgemäße Vorrichtung zur verbesserten Nutzung von Erdwärme, für Beheizungen mit Niedertemperatur enthält zumindest eine der folgenden Verbesserungen, so dass ein Wärmeübertrager angegeben wird, welcher zu Temperierungs- oder Beheizungszwecken eingesetzt werden kann, bevorzugt zur Beheizung von Verkehrsanlagen. Gegenüber dem Stand der Technik stellt sie ein effizienteres und wirtschaftlicheres Verfahren dar.

Im Unterschied zu den bekannten und im Zusammenhang mit Wärmepumpen eingesetzten Erdwärme nutzenden Wärmeübertragern, in denen die Wärmeübertragung von einem zwangsgeführten Medium kontrolliert auf ein zweites zwangsgeführte übertragen wird, wird hier bevorzugt vorgeschlagen, die in einem Arbeitsmedium enthaltene latente Wärme direkt an die Umgebung abzugeben.

Wird die Wärmeübertragungsfläche auf der Seite des Arbeitsmediums maximiert, so kann die notwendige Wärmemenge auch bei der aus Erdwärmesonden geringen Temperaturdifferenz übertragen werden.

Dadurch wird die Übertragungsfläche vom Arbeitsmedium zum Wärmeübertrager und somit die mögliche Energiedichte maximiert. Gleichzeitig wird hier aber durch eine kompakte Bauweise die Oberfläche gegen die Umgebung so klein wie möglich gehalten, um die Abstrahlverluste an die Umgebung zu minimieren.

Die bisher durch Regel- oder Stellglieder, wie Ventile, erfolgende Minderung der Wärmeentnahme aus einer Erdwärmesonde, erfolgt in der erfindungsgemäßen Lösung passiv, nämlich dadurch, dass eine Minimierung der Wärmeentnahme auf das Notwendige weitgehend durch die Materialwahl und Gestaltung der Oberfläche des Wärmeübertragers erreicht wird.

Ausführungsbeispiele der Erfindung werden anhand schematischer Zeichnungen näher erläutert.

Darin zeigen schematisch:
- Fig. 1: eine Draufsicht eines Wärmeübertragers mit Kanalstrukturen und der Fließcharakteristik des Arbeitsmediums,
- Fig. 2: einen Querschnitt durch einen Wärmeübertrager gemäß Fig. 1 entlang eines Minikanals,
- Fig. 3: einen Querschnitt durch eine weitere Ausführungsform eines Wärmeübertragers gemäß Fig. 1 entlang eines Minikanals,
- Fig. 4: eine Draufsicht einer weiteren Ausgestaltung eines Wärmeübertragers mit Kanalstrukturen und der Fließcharakteristik des Arbeitsmediums,
- Fig. 5: einen Querschnitt durch den Wärmeübertrager gemäß Fig. 4 entlang eines Minikanals,
- Fig. 6: eine Draufsicht einer weiteren Ausgestaltung eines Wärmeübertragers mit Kanalstrukturen und der Fließcharakteristik des Arbeitsmediums,
- Fig. 7: einen Querschnitt durch den Wärmeübertrager gemäß Fig. 6 entlang eines Minikanals,
- Fig. 8: eine Detailansicht der Bestandteile eines Wärmeübertragers zur Ausbildung von Mi- nikanälen,
- Fig. 9: einen senkrecht zu den Minikanälen verlaufenden Querschnitt des aus den Bestandteilen gemäß Fig. 8 gebildeten Wärmeübertragers,
- Fig. 10: Teilansicht einer Schwellenfachheizung mit aus einer Erdwärmesonde geführten Transportleitungen,
- Fig. 11: Teilansicht einer Schwellenfachheizung mit elastischem Verbindungselement zur Drucküberwachung und sich verzweigenden Transportleitungen,
- Fig. 12: Teilansicht der Schwellenfachheizung mit elastischem Verbindungselement zur Drucküberwachung und sich verzweigenden Transportleitungen gemäß Fig. 11 bei geändertem Druck,
- Fig. 13: Teilansicht einer weiteren Ausführungsform einer Gleitstuhlheizung mit Kanalstrukturen,
- Fig. 14: Teilansicht einer Gleitstuhlheizung mit zusätzlich im Gleitstuhl integriertem Wärmeübertrager mit Kanalstrukturen,
- Fig. 15: einen Querschnitt durch die Gleitstuhlheizung gemäß Fig. 14 senkrecht zu den Minikanälen,
- Fig. 16: Teilansicht einer Gleitstuhlheizung mit zwei aus einer Wärmequelle versorgten Wärmeübertragern mit Kanalstrukturen und sich verzweigenden Transportleitungen und verformbaren Elementen,
- Fig. 17: Teilansicht einer komplex aufgebauten Gleitstuhlheizung mit mehreren Wärmeübertragem,
- Fig. 18: Draufsicht auf die Kanalführung in einem Wärmespeicher,
- Fig. 19: Anordnung der einzelnen Systemelemente mit Wärmeübertrager und Wärmespeicher einer Wärmeübertragereinheit,
- Fig. 20: Anordnung der einzelnen Systemelemente mit Wärmeübertrager und Wärmespeicher einer Wärmeübertragereinheit in Verbindung mit einer Erdwärmesonde,
- Fig. 21: Teilansicht einer Verschlussfachheizung mit Kanalstrukturen, und
- Fig. 22: Teilansicht einer weiteren Ausführungsform einer Verschlussfachheizung mit Kanalstrukturen.
- Fig. 23: einen Querschnitt durch einen Wärmeübertrager entlang eines nach dem Gegenstromprinzip arbeitenden Minikanals,
- Fig. 24: einen Querschnitt durch einen Wärmeübertrager entlang eines nach dem Gegenstromprinzip arbeitenden Minikanals in Arbeitsstellung,
- Fig. 25: einen Querschnitt durch einen Wärmeübertrager entlang eines nach dem Gegenstromprinzip arbeitenden Minikanals in Stand by Stellung.

Einander entsprechende Teile sind in allen Figuren mit denselben Bezugszeichen versehen.

Fig. 1 zeigt eine Draufsicht eines Wärmeübertragers 11 mit Kanalstrukturen 111, 114, 115 und Fließcharakteristik FG, FF des Arbeitsmediums.

Der Wärmeübertrager 11 hat in Querrichtung eine Vielzahl zueinander parallel verlaufender Minikanäle 111. Der Gaszulauf und Kondensatrücklauf des Arbeitsmediums findet in unmittelbar benachbarten Zuführkanälen 114 und Abführkanälen 115 statt, die sich auf einer Seite der Minikanäle 111 befinden.

Pfeile mit der Bezeichnung FG symbolisieren die Fließrichtung des gasförmigen Mediums. Pfeile mit der Bezeichnung FF symbolisieren die Fließrichtung des flüssigen Mediums nach der Wärmeabgabe im Wärmeübertrager 11.

Im Wärmeübertrager 11 können die parallelen Minikanäle 111 selbstverständlich auch schräg oder beispielsweise in s-Form geschwungen oder spiralförmig verlaufen.

Fig. 2 zeigt einen Querschnitt durch einen Wärmeübertrager 11 gemäß Fig. 1 entlang eines Minikanals 111. Der Gaszulauf und Kondensatrücklauf des Arbeitsmediums findet in unmittelbar benachbarten Zuführkanälen 114 und Abführkanälen 115 statt, die sich auf einer Seite der Minikanäle 111 befinden. Die Minikanäle sind in diesem Falle mit konstantem Querschnitt entlang der Längsachse L ausgebildet. Bevorzugt werden derartige Minikanalanordnungen mit einer etwas aus der Horizontalen geneigten Längsachse L eingebaut, um vor allem den Kondensatrückfluss zu gewährleisten und so die Leistung zu verbessern.

Fig. 3 zeigt einen Querschnitt durch eine weitere Ausführungsform eines Wärmeübertragers 11 gemäß Fig. 1 entlang eines Minikanals 111. In diesem Falle steigt die obere Scheitellinie OS des Minikanals 111 ausgehend vom Zuführkanal 114 zu Leitung des gasförmigen Anteils des Arbeitsmediums leicht an. Die untere Scheitellinie US ist in Richtung des Abführkanals 115 zur Ableitung des flüssigen Anteils des Arbeitsmediums geneigt. In diesem Falle ist die üblicherweise bevorzugte Neigung der Längsachse L der Minikanäle 111 bereits im Wärmeübertrager 11 selbst integriert.

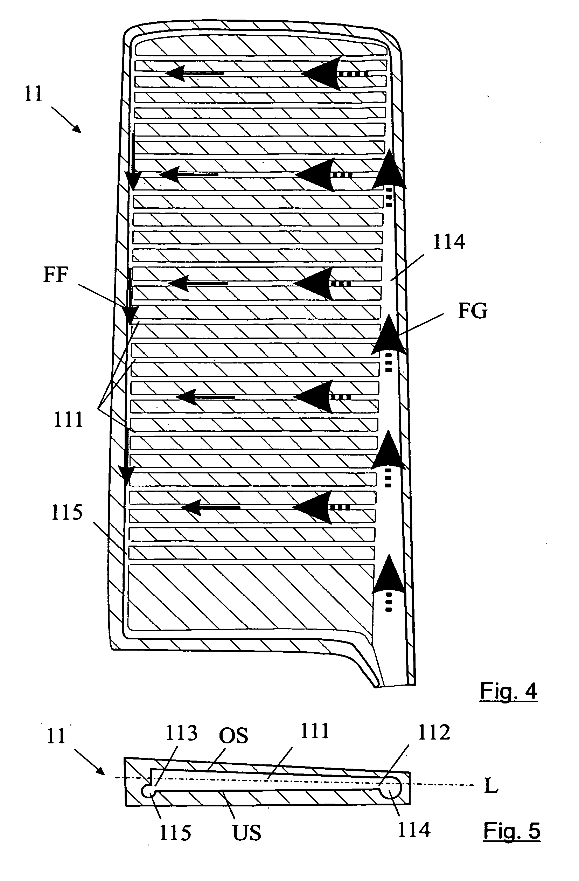

Fig. 4 zeigt eine Draufsicht einer weiteren Ausgestaltung eines Wärmeübertragers 11 mit Kanalstrukturen 111, 114, 115 und der Fließcharakteristik FG, FF des Arbeitsmediums.

Den zugehörigen Querschnitt durch den Wärmeübertrager 11 gemäß Fig. 4 entlang eines Minikanals 111 zeigt Fig. 5. Bei dieser Ausführungsform befinden sich der Zuführkanal 114 und der Abführkanal 115 auf jeweils gegenüber liegenden Seiten der Minikanäle 111. Der Verlauf eines Minikanals 111 zeigt wiederum eine obere Scheitellinie OS, die von der Eintrittsstelle 112 des gasförmigen Anteils des Arbeitsmediums ausgehend ansteigt. Die untere Scheitellinie US ist dagegen in Richtung der Austrittsstelle 113 des flüssigen Anteils des Arbeitsmediums geneigt.

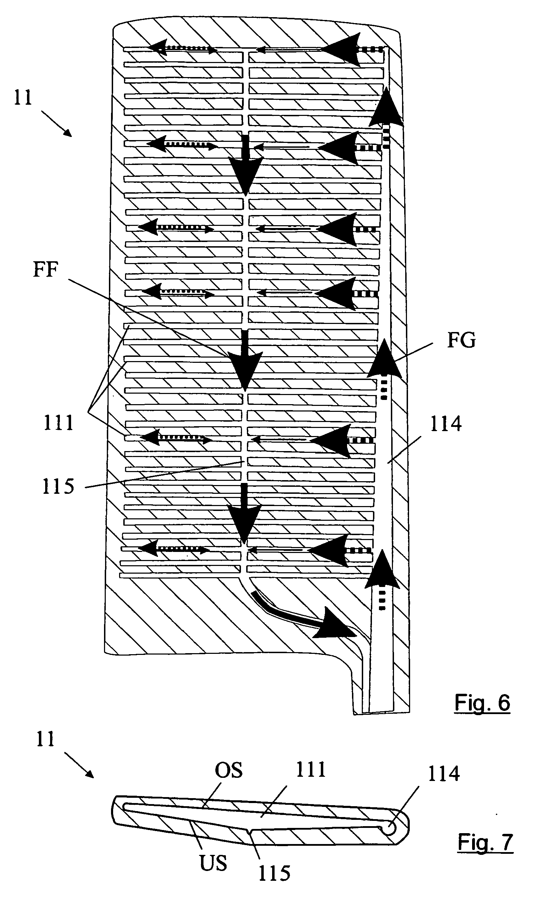

Fig. 6 zeigt eine Draufsicht einer weiteren Ausgestaltung eines Wärmeübertragers 11 mit Kanalstrukturen 111, 114, 115 und der Fließcharakteristik FG, FF des Arbeitsmediums. Bei dieser Ausführungsform teilt der Abführkanal 115 die zueinander parallel verlaufenden Minikanäle 111 in zwei Hälften.

Fig. 7 zeigt einen Querschnitt durch den Wärmeübertrager 11 gemäß Fig. 6 entlang eines Minikanals 111. Hierbei steigt die obere Scheitellinie OS des Minikanals 111 vom Zuführkanal 114 zur Führung des gasförmigen Anteils des Arbeitsmediums kontinuierlich an. Die untere Scheitellinie US ist in ihren Teilabschnitten jeweils in Richtung des Abführkanals 115 zur Ableitung des flüssigen Anteils des Arbeitsmediums geneigt.

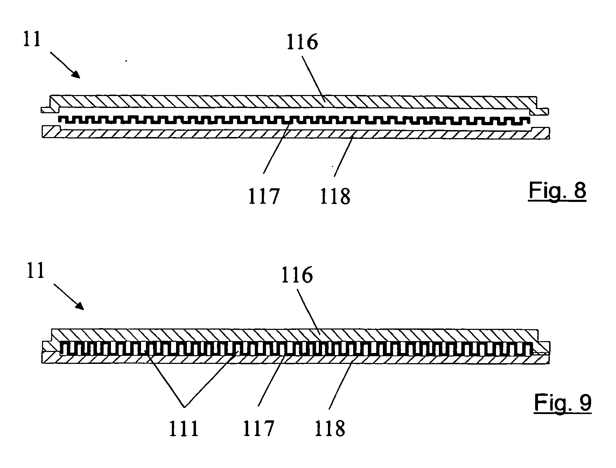

Fig. 8 zeigt eine Detailansicht der Bestandteile eines Wärmeübertragers 11 zur Ausbildung von Minikanälen 111. Der Wärmeübertrager 11 besteht aus einer Oberschale 116 und Unterschale 117, zwischen denen zur Ausbildung der Minikanäle 111 ein gestanztes Sickenblech 118 angeordnet wird. Der Wärmeübertrager, gebildet aus einer Oberschale 116, Unterschale 117 und einem Sickenblech 118, können auch einstückig aus einem Strangpressprofil hergestellt sein.

Die beschriebene Mehrstückigkeit des Wärmeübertragers 11 kann im Anwendungsfall auch dazu genutzt werden, dass beispielsweise die Oberschale 116 oder Unterschale 117 für sich einstückig mit dem zu beheizenden Bauteil verbunden sein kann. In diesem Falle wird die Endmontage des Wärmeübertragers 11 dann vor Ort vorgenommen. Die beschriebene Einstückigkeit dient dazu einen minimalen Wärmeübertragungswiderstand vom Wärmeübertrager zum zu beheizenden Bauteil zu gewährleisten.

In Fig. 9 zeigt einen senkrecht zu den Minikanälen 111 verlaufenden Querschnitt des aus den Bestandteilen gemäß Fig. 8 gebildeten Wärmeübertragers 111. Hier sind die Oberschale 116 und Unterschale 117 mit dem Sickenblech 118 zusammengefügt. Das Sickenblech 118 wird mit Oberschale 116 und Unterschale 117 druckdicht verbunden und hat einen guten wärmeleitenden Kontakt mit dem aus Unterschale 117 und Oberschale 116 gebildeten Gehäuse.

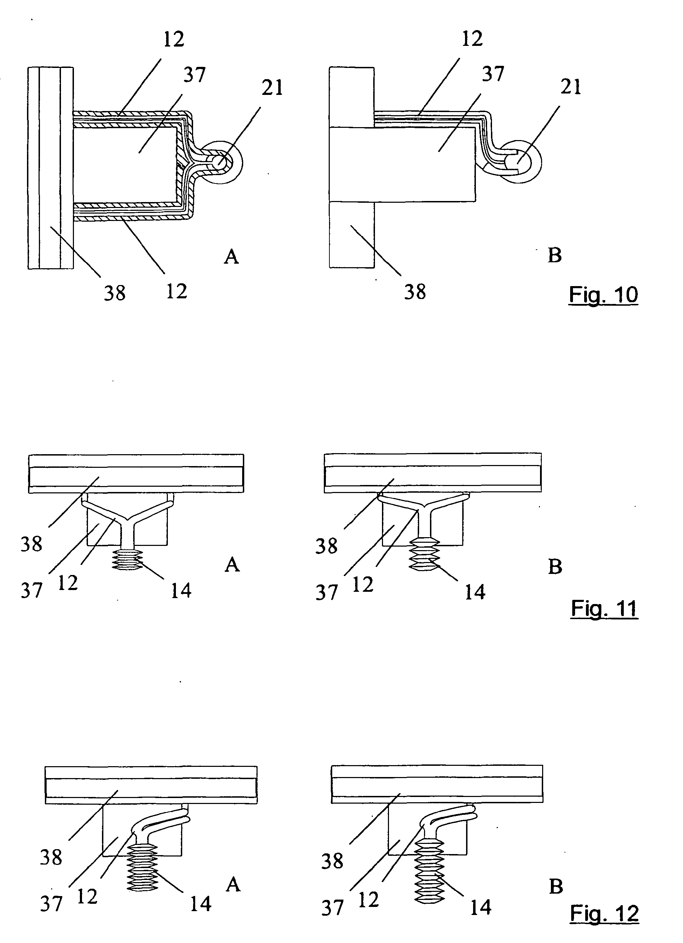

Fig. 10 zeigt eine Teilansicht einer Schwellenfachheizung mit einer Erdwärmesonde 21 und Transportleitungen 12. In Fig. 10A sind die Transportleitungen 12 entlang den Seitenflächen der Schwelle 37 zur Schiene 38 geführt. In Fig. 10B sind die Transportleitungen 12 entlang einer Seitenfläche der Schwelle 37 angeordnet.

Fig. 11A und B zeigen eine Teilansicht einer Schwellenfachheizung mit elastischem Verbindungselement 14 zur Drucküberwachung und sich verzweigende Transportleitungen 12. Die Transportleitungen 12 sind zum Teil über den Außenbereich der Schwelle 37 und im weiteren Verlauf zur Seitenfläche hin unter die Schiene 38 geführt. Das Verbindungselement 14 ist als integrierter Druckanzeiger ausgebildet sein, der einen möglichen Druckabfall im System signalisiert, welcher sich in einer Längenänderung des elastischen Verbindungselement 14 bemerkbar macht. Fig. 12A und B zeigen eine Teilansicht einer weiteren Ausführung der Schwellenfachheizung mit elastischem Verbindungselement 14 zur Drucküberwachung und sich verzweigende Transportleitungen 12, die an einer Seitenfläche der Schwelle 37 angeordnet sind.

Die Funktionssicherheit der Wärmeübertrager, die von der Einhaltung des Betriebsdruckes abhängt, wird durch einen in das elastische Glied der Schwingungsisolation integrierten Druckanzeiger überwacht. Es handelt sich hier um ein Wellrohr, das in der Transportzone, sichtbar neben dem Schwellenkopf angeordnet ist. Ist der Betriebsdruck im Rohr ausreichend, ist das Wellrohr gestreckt, sinkt der Betriebsdruck durch einen Schaden, so verkürzt sich das Wellrohr. Somit wird entweder beim Betrachten erkennbar oder durch einen bei der Verkürzung ausgelösten elektrischen Kontakt der Schaden signalisiert. Ein Vergleich der beiden Fig. 11A und B sowie Fig. 12A und B zeigt die Auswirkung der druckbedingten Längenänderung, die durch das elastische Verbindungselement 14 angezeigt wird. Die Druckanzeige kann auch dadurch erfolgen, dass beispielsweise ein mit Druck beaufschlagtes Versorgungsrohr aus elastischem Material besteht, dass bei starkem Druckabfall durchhängt.

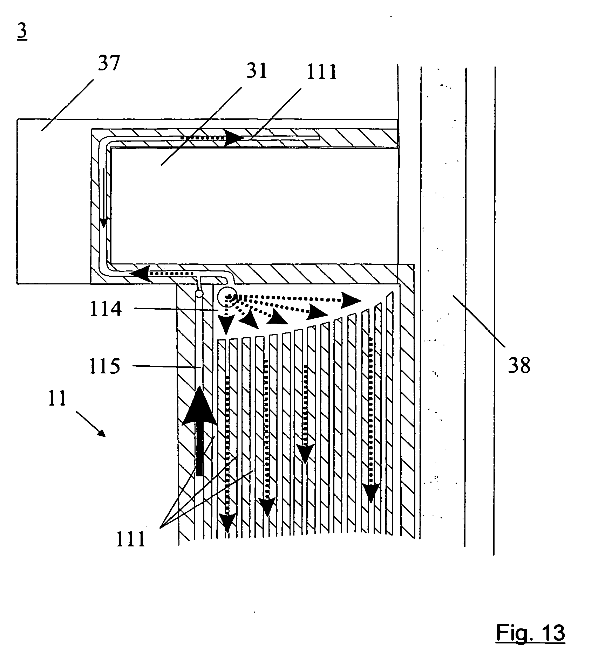

Fig. 13 zeigt eine Teilansicht einer weiteren Ausführungsform einer Weichen- und Gleitstuhlheizung mit Kanalstrukturen 111, 114, 115. Die Heizung erfolgt mit um den Gleitstuhl 31 geführten außen liegenden Kanälen 111, die auf der Schwelle 37 angeordnet sind. Die einzelnen Kanäle 111 können auch unterschiedliche Querschnitte haben, um eine gleichmäßige Verteilung des gasförmigen Arbeitsmediums zu erreichen. Der Wärmeübertrager 11 verläuft parallel zur Schiene 38, um diese in Teilabschnitten mitzuheizen.

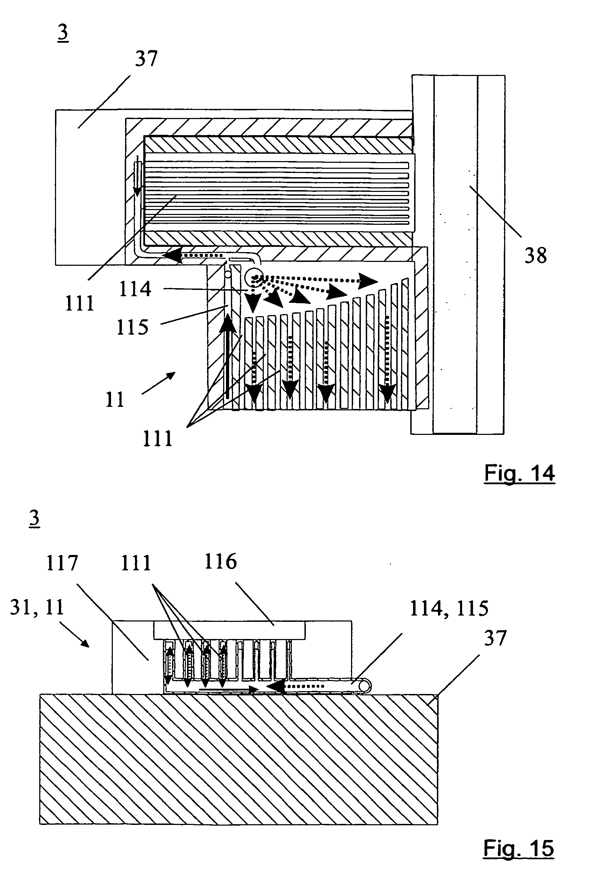

Fig. 14 zeigt eine Teilansicht einer Weichen- und Gleitstuhlheizung mit zusätzlich im Gleitstuhl integriertem Wärmeübertrager 11 mit Kanalstrukturen 111. Der Wärmeübertrager 11 verläuft wiederum parallel zur Schiene 38, um diese in Teilabschnitten mitzuheizen. Der Gleitstuhl 31 erhält auf der Schwelle 37 oben mittig eine ausreichende Aussparung, in die zusätzliche Nuten zur Aufnahme von Minikanälen 111 eingelassen sind.

Wie Fig. 15 im Querschnitt durch die Gleitstuhlheizung gemäß Fig. 14 senkrecht zu den Minikanälen zeigt, wird in die Aussparung eine zusätzliche Platte als Oberschale 116 eingelegt, die die von der Weichenzunge ausgehenden Druckkräfte aufnimmt. Der Gleitstuhl 31 ist quasi selbst als Wärmeübertrager 11 ausgestaltet.

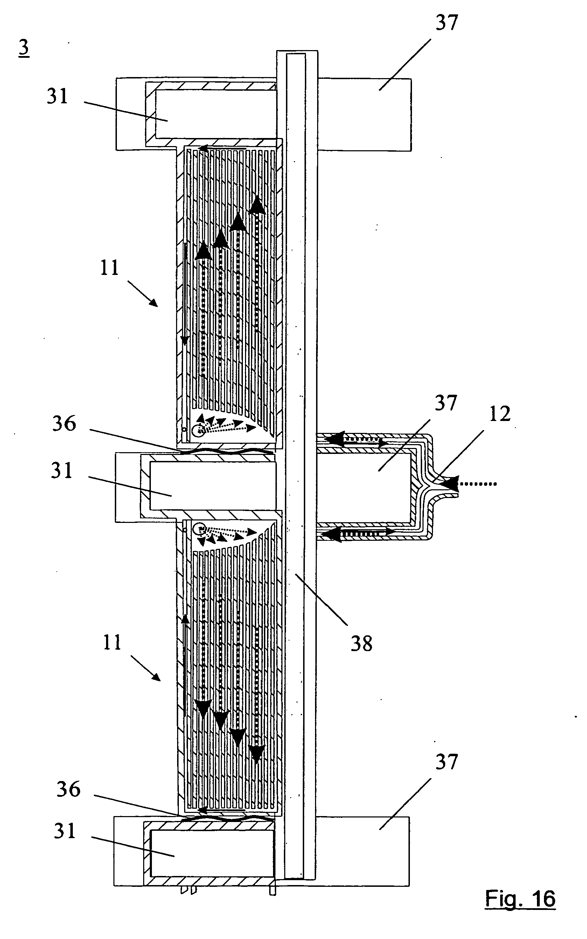

Fig. 16 zeigt eine Teilansicht einer Weichen- und Gleitstuhlheizung mit zwei aus einer Wärmequelle versorgten Wärmeübertragern 11 mit Kanalstrukturen 111, 114, 115 und sich verzweigenden Transportleitungen 12. Die Anordnung von zwei aus einem Sondenrohr gespeisten Wärmeübertragern mit längs verlaufenden Kanälen zeigt auch ein verformbares Element 36 am Gleitstuhl 31 zum Längenausgleich des Einbauraumes im Schwellenfach. Die Transportleitung 12 weist eine bodenseitig etwas ausgebuchtete Form zur verbesserten Trennung der Gasphase und des Kondensates durch den tiefer liegenden Kondensatkanal.

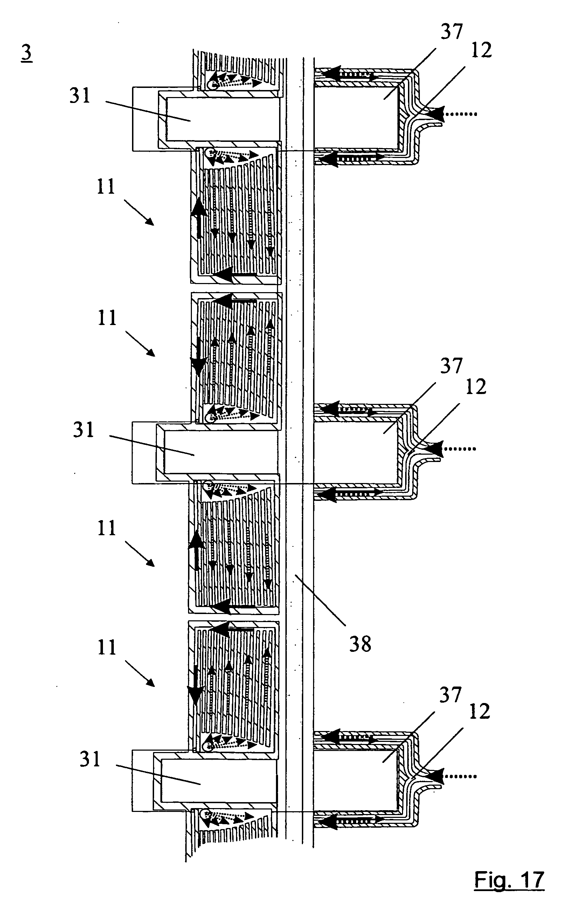

Fig. 17 zeigt eine Teilansicht einer komplex aufgebauten Weichen- und Gleitstuhlheizung mit mehreren Wärmeübertragern 11, befestigt auf der Schwelle oder an dem Gleitstuhl. Dargestellt ist eine aneinander gereihte Anordnung von Wärmeübertragern 11 mit längs zur Schiene 38 verlaufenden Minikanälen. Diese können auch quer zur Schiene angeordnet sein. Die Schwellen eines Gleises und die Gleitstühle verändern während der Liegezeit durch die auftretenden Lastkollektive ihre Lage. Deshalb sind jeweils zwei Wärmeübertrager 11 paarweise an einem Gleitstuhl 31 angeordnet, wobei zwischen den zwei Wärmeübertragern 11 zur Längenausdehnung ein gewisser Spalt verbleibt. Die Zuleitung des Arbeitsmediums erfolgt aus einem in der Figur nicht dargestellten Sondenrohr an die in Reihe angeordneten Wärmeübertrager 11, wobei die Wärmeübertragers 11 aus sich verzweigenden Transportleitungen 12 versorgt werden. In diesem Falle sind die zuführenden und rückführenden Transportleitungen mit einem Rohr realisiert.

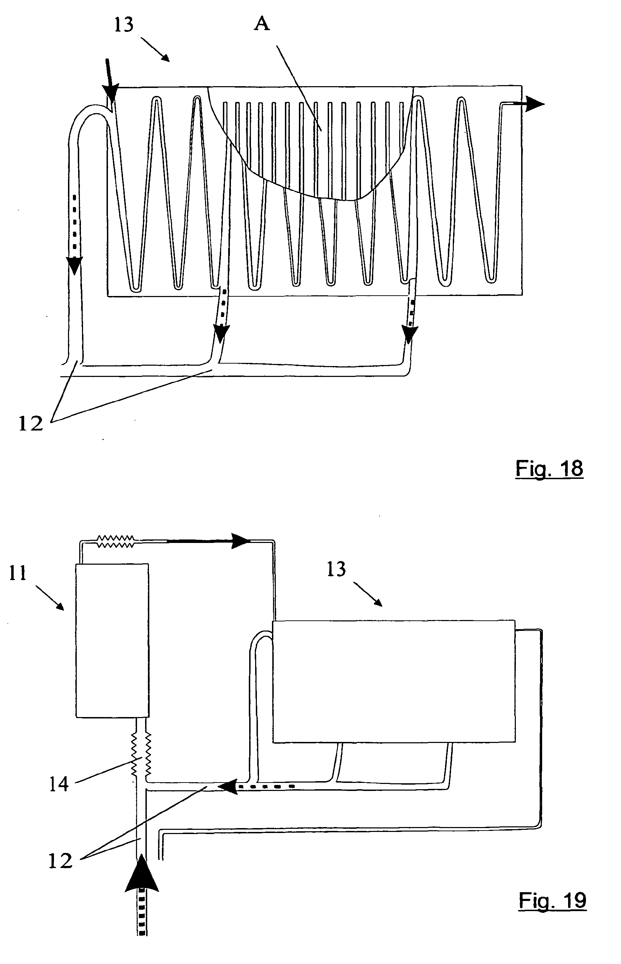

Fig. 18 zeigt eine Draufsicht auf die Kanalführung in einem Wärmespeicher 13. Es handelt sich beispielsweise hier um einen Latentwärmespeicher, aus dem das aus der Wärmesenke rückfließende Kondensat die im Wärmespeicher 13 enthaltene Wärme aufnimmt, verdampft und wieder zur Wärmesenke - dem Wärmeübertrager 11 - strömt, ohne der Erdwärmesonde als Quelle Wärme entzogen zu haben. In der tiefer liegenden Schnittebene A ist eine mögliche Anordnung von zueinander parallel verlaufenden Zonen aus Speichermaterial dargestellt.

Damit das rückströmende Gas und das gegenläufige Kondensat sich nur wenig beeinflussen, sind die Kanäle in Richtung der Gasströmung aufgeweitet, und diese bevorzugt horizontal. Die Kanäle haben, entsprechend mit der in der Wärmequelle aufnehmbaren Wärme, bevorzugt mehrere im Verlauf des Kondensatflusses liegende Auslässe, durch die das Gas aus dem Kanal entweicht und zum Wärmeübertrager zurückströmt. Der Wärmespeicher 13 kann in mehrere Bereiche aufgeteilt sein. Damit wird parallel dazu die Wärme in dem jeweiligen Bereich entnommen. Ist die Wärmequelle im ersten Abschnitt abgekühlt, so wird das Kondensat hier nicht mehr verdampft, sondern tritt in den zweiten Bereich ein, dessen Wärme es aufnimmt, verdampft und durch den nächsten Auslass zur Wärmesenke zurückströmt. Analog sind die Vorgänge in den weiteren Bereichen. Die Einteilung in mehrere Bereiche hat den Vorteil, dass das Gas nicht über die gesamte Rohrlänge in der Wärmequelle gegenläufig zum Kondensat strömt und sich die beiden Phasen so nur wenig behindern.

Fig. 19 zeigt eine Anordnung der einzelnen Systemelemente mit Wärmeübertrager 11 und Wärmespeicher 13 einer Wärmeübertragereinheit. Die Anordnung der Systemelemente zeigt die Verbindung des Wärmeübertragers 11 und des Wärmespeichers 13 über die Transportleitungen 14 mit elastischen Verbindungselementen 14. Die Strömungsrichtungen des Arbeitsmediums durch das System sind ebenfalls ersichtlich.

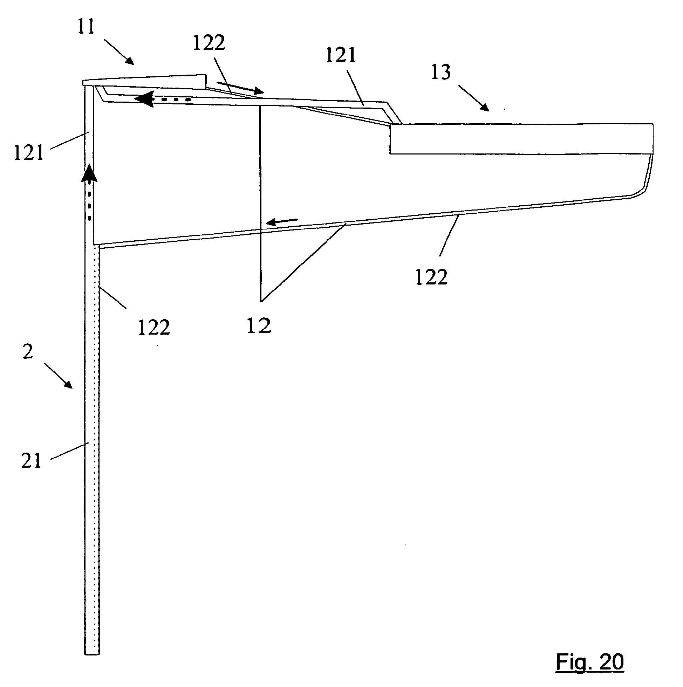

Fig. 20 zeigt die Anordnung der einzelnen Systemelemente mit Wärmeübertrager 11 und Wärmespeicher 13 einer Wärmeübertragereinheit 1 in Verbindung mit einer Erdwärmesonde 21 als Wärmequelle 2. Zur Verdeutlichung sind wiederum die Strömungsrichtungen des Arbeitsmediums durch das System eingezeichnet.

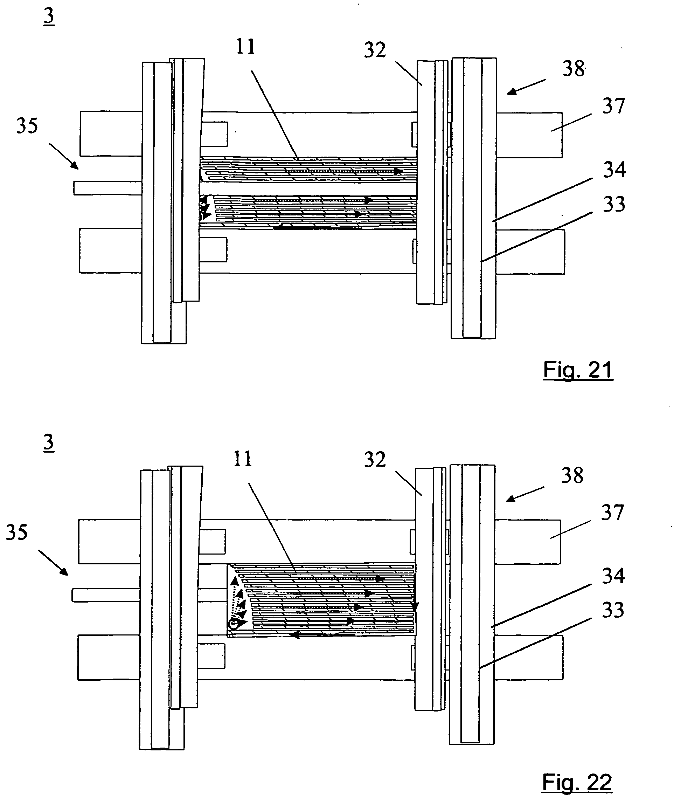

Die Fig. 21 und 22 zeigen eine Anordnung der Wärmeübertrager 11 für eine Verschlussfachheizung einer Weiche 3. Das Verschlussfach 35 wird mit einem Wärmeübertrager 11 abgedeckt, damit das Eindringen von Schnee oder Eis minimiert wird. Am Boden des Verschlussfaches kann ein weiterer Wärmeübertrager angeordnet werden, der ein Anfrieren des Schmelzwassers im Verschlussfach verhindert und das Wasser so abgeleitet wird.

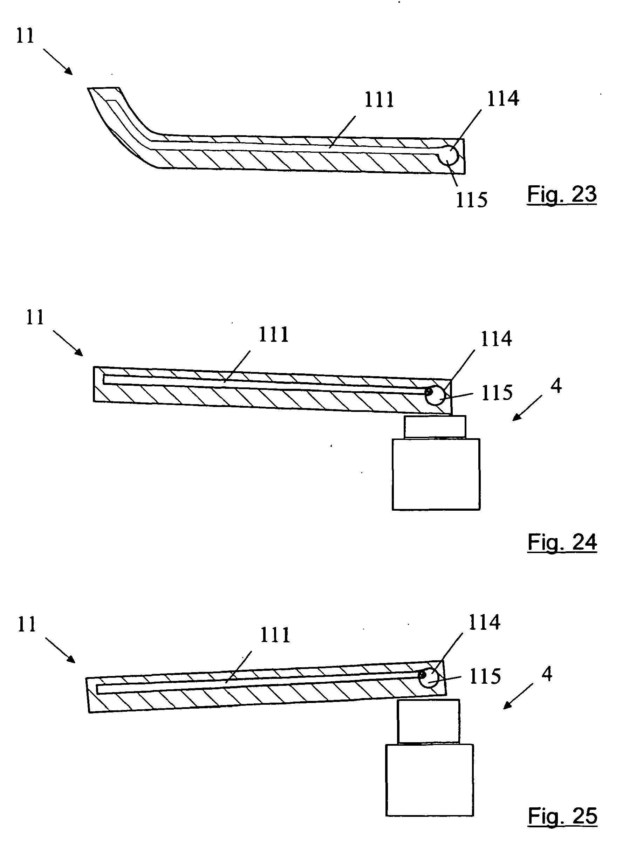

Fig. 23 zeigt einen Querschnitt durch einen Wärmeübertrager 11 entlang eines nach dem Gegenstromprinzip arbeitenden Minikanals 111. Um den Rücklauf des Kondensates bei nahezu waagerecht liegendem Wärmeübertrager zu verbessern, ist das geschlossene Ende bei der Gegenstromausführung hochgezogen. Zuführ- 114 und Abführkanal 115 sind als einheitlicher Versorgungskanal in einem ausgebildet.

Fig. 24 und 25 zeigen einen Querschnitt durch einen Wärmeübertrager 11 mit Kippmechanismus 4 entlang eines nach dem Gegenstromprinzip arbeitenden Minikanals 111. Der Kanal ist in Fig. 24 in Arbeitsstellung gekippt. Das flüssige Arbeitsmedium kann aufgrund der Neigung in dieser Stellung zur Wärmequelle ungehindert abfließen. Dagegen ist gemäß Fig. 25 der Wärmeübertrager 11 in Stand by Stellung. Die Minikanäle 111 des Wärmeübertragers 11 sind durch den Kippmechanismus so geneigt, dass das kondensierte Arbeitsmedium nicht mehr zur Wärmequelle zurückfließen kann. Auf diese Weise lässt sich die Energieentnahme aus der Wärmequelle gezielt steuern.

### Bezugszeichenliste

- 1: Wärmeübertragereinheit
- 11: Wärmeübertrager
- 111: Minikanäle
- 112: Eintrittsstelle
- 113: Austrittsstelle
- 114: Zuführkanal, Versorgungskanal
- 115: Abführkanal, Versorgungskanal
- 116: Oberschale
- 117: Unterschale
- 118: Sickenblech
- 12: Transportleitungen
- 121: zuführende Transportleitung
- 122: rückführende Transportleitung
- 13: Wärmespeicher
- 14: Verbindungselement
- 2: Wärmequelle
- 21: Erdwärmesonde
- 22: Zusatzheizung
- 3: zu beheizendes Bauteil; Weiche
- 31: Gleitstuhl
- 32: Weichenzunge
- 33: Schienensteg
- 34: Schienenfuß
- 35: Verschlussfach
- 36: verformbare Elemente
- 37: Schwelle
- 38: Schiene

- 4: Kippmechanismus, Steuereinheit

- OS: obere Scheitellinie eines Minikanals
- US: untere Scheitellinie eines Minikanals
- L: Längsachse eines Minikanals
- FG: Fließrichtung gasförmiges Medium
- FF: Fließrichtung flüssiges Medium
- A: tiefer liegende Schnittebene

## Patentansprüche

1. Wärmeübertragereinheit (1) zur Beheizung von Anlagen und Flächen, die zumindest an eine mit einem mehrphasigen Arbeitsmedium betriebene Erdwärmesonde (21) als Wärmequelle (2) sowie an ein zu beheizendes Bauteil (3) anschließbar ist und aus zumindest einem Wärmeübertrager (11) und Transportleitungen (12) für das gasförmige bzw. flüssige Arbeitsmedium besteht,
**dadurch gekennzeichnet,**
- **dass** zur Übertragung der aus der Wärmequelle (2) stammenden Latentwärme aus dem erwärmten gasförmigen Anteil des Arbeitsmediums auf das zu beheizende Bauteil (3) zumindest ein gasdichter Wärmeübertrager (11) modulartig mit einer Vielzahl von unmittelbar benachbarten Minikanälen (111) in flächenhafter Anordnung ausgebildet ist, die mit zumindest einem Versorgungskanal (114, 115) in Verbindung stehen und,
- **dass** die Minikanäle (111) einen Durchmesser von 0,3 bis 6 mm aufweisen.

2. Wärmeübertragereinheit nach Anspruch 1, **dadurch gekennzeichnet, dass** im Wärmeübertrager (11) die Minikanäle (111) auf mehreren Ebenen angeordnet sind.

3. Wärmeübertragereinheit nach Anspruch 1 oder 2, **dadurch gekennzeichnet, dass** die obere Scheitellinie (OS) eines Minikanals (111) von der Eintrittsstelle (112) des gasförmigen Anteils des Arbeitsmediums ausgehend abschnittsweise sowohl ansteigend als auch abfallend verläuft.

4. Wärmeübertragereinheit nach Anspruch 1 oder 2, **dadurch gekennzeichnet, dass** die obere Scheitellinie (OS) eines Minikanals (111) von der Eintrittsstelle (112) des gasförmigen Anteils des Arbeitsmediums ausgehend ansteigt.

5. Wärmeübertragereinheit nach einem der Ansprüche 1 bis 4, **dadurch gekennzeichnet, dass** die untere Scheitellinie (US) eines Minikanals (111) bzw. eines Kanalabschnittes in Richtung der Austrittsstelle (113) des flüssigen Anteils des Arbeitsmediums geneigt ist.

6. Wärmeübertragereinheit nach einem der Ansprüche 1 bis 5, **dadurch gekennzeichnet, dass** sich ein Minikanal (111) entlang der Längsachse (L) aufweitet.

7. Wärmeübertragereinheit nach einem der Ansprüche 1 bis 6, **dadurch gekennzeichnet, dass** sich der Zuführkanal (114) in Fließrichtung des gasförmigen Fluids entlang der Längsachse (L) verjüngt.

8. Wärmeübertragereinheit nach einem der Ansprüche 1 bis 7, **dadurch gekennzeichnet, dass** sich der Abführkanal (115) in Fließrichtung des Fluids entlang der Längsachse (L) aufweitet.

9. Wärmeübertragereinheit nach einem der Ansprüche 1 bis 8, **dadurch gekennzeichnet, dass** Zuführkanal (114) und Abführkanal (115) auf einer Seite der Minikanäle (111) als ein Versorgungskanal ausgebildet sind oder Zuführkanal (114) und Abführkanal (115) voneinander beabstandet angeordnet sind.

10. Wärmeübertragereinheit nach einem der Ansprüche 1 bis 9, **dadurch gekennzeichnet, dass** zwischen dem Arbeitsmedium und der äußeren Oberfläche des Wärmeübertragers (11) zumindest partiell eine den Wärmedurchgang dämmende Schicht angeordnet ist.

11. Wärmeübertragereinheit nach einem der Ansprüche 1 bis 10, **dadurch gekennzeichnet, dass** die vom Arbeitsmedium durchströmten Minikanäle (111) in ein Gehäuse eingebracht sind, wobei die Wärmeleitwerte der Materialien der Baugruppen unterschiedlich sein können.

12. Wärmeübertragereinheit nach einem der Ansprüche 1 bis 11, **dadurch gekennzeichnet, dass** in zumindest einer Transportleitung (12) für den Rücklauf des flüssigen Arbeitsmediums zur Wärmequelle (2) und/oder in zumindest einem Wärmeübertrager (11) ein Wärmespeicher (13) integriert ist.

13. Wärmeübertragereinheit nach Anspruch 12, **dadurch gekennzeichnet, dass** vom Wärmespeicher (13) eine rückführende Transportleitung (122) zum Wärmeübertrager (11) für das durch Wärmeaufnahme im Wärmespeicher (13) gebildete gasförmige Arbeitsmedium angeordnet ist.

14. Wärmeübertragereinheit nach einem der Ansprüche 1 bis 13, **dadurch gekennzeichnet, dass** eine Zusatzheizung (22) als weitere Wärmequelle (2) integriert ist.

15. Wärmeübertragereinheit nach einem der Ansprüche 1 bis 14, **dadurch gekennzeichnet, dass** die Oberseite eines Wärmeübertragers (11) aus der Horizontalen zumindest leicht geneigt installierbar ist.

16. Wärmeübertragereinheit nach einem der Ansprüche 1 bis 15, **dadurch gekennzeichnet, dass** eine im Erdreich fest installierte Erdwärmesonde (21) durch ein dauerelastisches Verbindungselement (14) schwingungstechnisch trennbar ist.

17. Wärmeübertragereinheit nach einem der Ansprüche 1 bis 16, **dadurch gekennzeichnet, dass** das zu beheizende Bauteil als Wärmeübertrager (11) ausgebildet ist.

18. Wärmeübertragereinheit nach einem der Ansprüche 1 bis 17, **dadurch gekennzeichnet, dass** die Minikanäle 111 zumindest als mittragende Elemente des zu beheizenden Bauteils ausgebildet sind.

19. Wärmeübertragereinheit nach einem der Ansprüche 1 bis 18, **dadurch gekennzeichnet, dass** der Wärmeübertrager (11) mit seinen Minikanälen (111) mittels einer Steuereinheit (4) gegenüber der Horizontalen kippbar ausgebildet ist.

20. Wärmeübertragereinheit nach einem der Ansprüche 1 bis 19, **dadurch gekennzeichnet, dass** zumindest eine rückführende Transportleitung (122) mittels einer Steuereinheit (4) angehoben wird, wodurch der Rückfluss des Kondensats verhindert wird.

21. Weichenheizung mit einer Wärmeübertragereinheit (1) nach einem der Ansprüche 1 bis 20, **dadurch gekennzeichnet, dass** zumindest ein Wärmeübertrager (11) zumindest in einem Gleitstuhl (31), im Verschlussfach (35), im Bereich der Weichenzunge (32) am Schienensteg (33) und/oder am Schienenfuß (34) der Weiche integriert ist.

22. Weichenheizung mit einer Wärmeübertragereinheit (1) nach Anspruch 21, **dadurch gekennzeichnet, dass** die Wärmeübertragereinheit (1) an den Auflagepunkten an der Weiche (3) mit verformbaren Elementen (36) gelagert ist.

## Claims

1. A heat exchanger unit (1) for heating systems and surfaces, which heat exchanger unit (1) can be connected at least to a thermal ground probe (21), which is operated with a multi-phase working medium, as a heat source (2) and to a component (3) to be heated, and which heat exchanger unit (1) is composed of at least one heat exchanger (11) and transport lines (12) for the gaseous or liquid working medium,
**characterized**
- **in that**, for the transfer of the latent heat originating from the heat source (2) from the heated gaseous component of the working medium to the component (3) to be heated, at least one gas-tight heat exchanger (11) is formed, in a modular fashion, with a multiplicity of directly adjacent mini-ducts (111) in a laminar arrangement, which mini-ducts (111) are connected to at least one supply duct (114, 115), and
- **in that** the mini-ducts (111) have a diameter of 0.3 to 6 mm.

2. The heat exchanger unit as claimed in claim 1, **characterized in that** the mini-ducts (111) are arranged in a plurality of planes in the heat exchanger (11).

3. The heat exchanger unit as claimed in claim 1 or 2, **characterized in that** the upper apex line (OS) of a mini-duct (111) runs in both a rising and falling manner in sections proceeding from the inlet point (112) of the gaseous component of the working medium.

4. The heat exchanger unit as claimed in claim 1 or 2, **characterized in that** the upper apex line (OS) of a mini-duct (111) rises proceeding from the inlet point (112) of the gaseous component of the working medium.

5. The heat exchanger unit as claimed in one of claims 1 to 4, **characterized in that** the lower apex line (US) of a mini-duct (111) or of a duct section is inclined in the direction of the outlet point (113) of the liquid component of the working medium.

6. The heat exchanger unit as claimed in one of claims 1 to 5, **characterized in that** a mini-duct (111) widens along the longitudinal axis (L).

7. The heat exchanger unit as claimed in one of claims 1 to 6, **characterized in that** the feed duct (114) tapers along the longitudinal axis (L) in the flow direction of the gaseous fluid.

8. The heat exchanger unit as claimed in one of claims 1 to 7, **characterized in that** the discharge duct (115) widens along the longitudinal axis (L) in the flow direction of the fluid.

9. The heat exchanger unit as claimed in one of claims 1 to 8, **characterized in that** the feed duct (114) and discharge duct (115) are formed on one side of the mini-ducts (111) as a supply duct, or the feed duct (114) and discharge duct (115) are arranged spaced apart from one another.

10. The heat exchanger unit as claimed in one of claims 1 to 9, **characterized in that** a layer which inhibits the transfer of heat is at least partially arranged between the working medium and the outer surface of the heat exchanger (11).

11. The heat exchanger unit as claimed in one of claims 1 to 10, **characterized in that** the mini-ducts (111) which are traversed by the working medium are formed into a housing, wherein the heat conductance values of the materials of the assemblies may differ.

12. The heat exchanger unit as claimed in one of claims 1 to 11, **characterized in that** a heat accumulator (13) is integrated into at least one transport line (12) for the return flow of the liquid working medium to the heat source (2) and/or in at least one heat exchanger (11).

13. The heat exchanger unit as claimed in claim 12, **characterized in that** a return transport line (122) is arranged from the heat accumulator (13) to the heat exchanger (11) for the gaseous working medium formed as a result of the absorption of heat in the heat accumulator (13).

14. The heat exchanger unit as claimed in one of claims 1 to 13, **characterized in that** an auxiliary heater (22) is integrated as a further heat source (2).

15. The heat exchanger unit as claimed in one of claims 1 to 14, **characterized in that** the upper side of a heat exchanger (11) can be installed so as to be at least slightly inclined with respect to the horizontal.

16. The heat exchanger unit as claimed in one of claims 1 to 15, **characterized in that** a thermal ground probe (21) which is fixedly installed in the ground can be separated in terms of vibration by means of a permanently elastic connecting element (14).

17. The heat exchanger unit as claimed in one of claims 1 to 16, **characterized in that** the component to be heated is designed as a heat exchanger (11).

18. The heat exchanger unit as claimed in one of claims 1 to 17, **characterized in that** the mini-ducts (111) are formed at least as co-supporting elements of the component to be heated.

19. The heat exchanger unit as claimed in one of claims 1 to 18, **characterized in that** the heat exchanger (11) with its mini-ducts (111) is designed such that it can be tilted with respect to the horizontal by means of a control unit (4).

20. The heat exchanger unit as claimed in one of claims 1 to 19, **characterized in that** at least one return transport line (122) is raised by means of a control unit (4), thereby preventing the return flow of condensate.

21. A track switch heater having a heat exchanger unit (1) as claimed in one of claims 1 to 20, **characterized,in that** at least one heat exchanger (11) is integrated at least in a slide chair (31), in the locking crib (35), in the region of the track switch tongue (32) on the rail web (33) and/or on the rail base (34) of the track switch.

22. The track switch heater having a heat exchanger unit (1) as claimed in claim 21, **characterized in that** the heat exchanger unit (1) is mounted on the support points on the track switch (3) by means of deformable elements (36).

## Revendications

1. Unité de transfert de chaleur (1) pour le chauffage d'installations et de surfaces, qui peut au moins être raccordée à une sonde géothermique (21) faisant office de source de chaleur (2) et fonctionnant avec un fluide de travail à phases multiples, ainsi qu'à un élément (3) à chauffer, et qui est constituée d'au moins un échangeur de chaleur (11) et de conduites de transport (12) pour le fluide sous forme gazeuse ou liquide,
**caractérisée**
- **en ce que** pour le transfert de la chaleur latente en provenance de la source de chaleur (2), à partir de la fraction gazeuse du fluide de travail échauffé à l'élément (3) à chauffer, au moins un échangeur de chaleur (11) étanche aux gaz est conçu de façon modulaire avec un grand nombre de mini-canaux (111) directement voisins les uns des autres selon un agencement plan, qui sont reliés à au moins un canal d'approvisionnement (114, 115), et
- **en ce que** les mini-canaux (111) présentent un diamètre de 0,3 à 6 mm.

2. Unité de transfert de chaleur selon la revendication 1, **caractérisée en ce que** dans l'échangeur de chaleur (11), les mini-canaux (111) sont agencés sur plusieurs plans.

3. Unité de transfert de chaleur selon la revendication 1 ou la revendication 2, **caractérisée en ce que** la ligne des sommets supérieure (OS) d'un mini-canal (111) s'étend, à partir de la zone d'entrée (112) de la fraction gazeuse du fluide de travail, par tronçons, aussi bien de manière ascendante que descendante.

4. Unité de transfert de chaleur selon la revendication 1 ou la revendication 2, **caractérisée en ce que** la ligne des sommets supérieure (OS) d'un mini-canal (111) s'étend de manière ascendante à partir de la zone d'entrée (112) de la fraction gazeuse du fluide de travail.

5. Unité de transfert de chaleur selon l'une des revendications 1 à 4, **caractérisée en ce que** la ligne des sommets inférieure (US) d'un mini-canal (111) ou d'un tronçon de canal, est inclinée en direction de la zone de sortie (113) de la fraction liquide du fluide de travail.

6. Unité de transfert de chaleur selon l'une des revendications 1 à 5, **caractérisée en ce qu'**un mini-canal (111) s'évase le long de l'axe longitudinal (L).

7. Unité de transfert de chaleur selon l'une des revendications 1 à 6, **caractérisée en ce que** le canal d'alimentation (114) se rétrécit dans la direction d'écoulement du fluide sous forme gazeuse, le long de l'axe longitudinal (L).

8. Unité de transfert de chaleur selon l'une des revendications 1 à 7, **caractérisée en ce que** le canal d'évacuation (115) s'évase dans la direction d'écoulement du fluide, le long de l'axe longitudinal (L).

9. Unité de transfert de chaleur selon l'une des revendications 1 à 8, **caractérisée en ce que** le canal d'alimentation (114) et le canal d'évacuation (115) sont formés sur un côté des mini-canaux (111), en tant que canal d'approvisionnement, ou bien le canal d'alimentation (114) et le canal d'évacuation (115) sont agencés à distance l'un de l'autre.

10. Unité de transfert de chaleur selon l'une des revendications 1 à 9, **caractérisée en ce qu'**entre le fluide de travail et la surface externe de l'échangeur de chaleur (11), est agencée, au moins partiellement, une couche atténuant le passage de la chaleur.

11. Unité de transfert de chaleur selon l'une des revendications 1 à 10, **caractérisée en ce que** les mini-canaux (111) traversés par l'écoulement du fluide de travail sont insérés dans un carter, les coefficients de conductivité thermique des matériaux des modules de construction pouvant être différents.

12. Unité de transfert de chaleur selon l'une des revendications 1 à 11, **caractérisée en ce qu'**un accumulateur de chaleur (13) est intégré dans au moins une conduite de transport (12) pour l'écoulement de retour du fluide de travail liquide vers la source de chaleur (2) et/ou dans au moins un échangeur de chaleur (11).

13. Unité de transfert de chaleur selon la revendication 12, **caractérisée en ce qu'**une conduite de transport de recyclage (122) est agencée à partir de l'accumulateur de chaleur (13) en retour vers l'échangeur de chaleur (11) pour le fluide de travail sous forme gazeuse formé par absorption de chaleur dans l'accumulateur de chaleur (13).

14. Unité de transfert de chaleur selon l'une des revendications 1 à 13, **caractérisée en ce que** qu'un chauffage auxiliaire (22) est intégré en guise de source de chaleur (2) supplémentaire.

15. Unité de transfert de chaleur selon l'une des revendications 1 à 14, **caractérisée en ce que** le côté supérieur d'un échangeur de chaleur (11) peut être installé de manière à être au moins légèrement incliné par rapport à l'horizontale.

16. Unité de transfert de chaleur selon l'une des revendications 1 à 15, **caractérisée en ce qu'**une sonde géothermique (21) installée de manière fixe dans le sol, peut être isolée sur le plan de la technique vibratoire, par un élément de liaison (14) à élasticité permanente.

17. Unité de transfert de chaleur selon l'une des revendications 1 à 16, **caractérisée en ce que** l'élément à chauffer est réalisé en tant qu'échangeur de chaleur (11).

18. Unité de transfert de chaleur selon l'une des revendications 1 à 17, **caractérisée en ce que** les mini-canaux (111) sont réalisés au moins en tant qu'éléments co-porteurs de l'élément à chauffer.

19. Unité de transfert de chaleur selon l'une des revendications 1 à 18, **caractérisée en ce que** l'échangeur de chaleur (11) avec ses mini-canaux (111) est conçu de manière à pouvoir être basculé par rapport à l'horizontale, au moyen d'une unité de commande (4).

20. Unité de transfert de chaleur selon l'une des revendications 1 à 19, **caractérisée en ce qu'**au moins une conduite de transport de recyclage (122) est soulevée au moyen d'une unité de commande (4), ce qui empêche l'écoulement de retour du condensat.

21. Système de chauffage d'aiguillage comprenant une unité de transfert de chaleur (1) selon l'une des
revendications 1 à 20, **caractérisé en ce qu'**au moins un échangeur de chaleur (11) est intégré au moins à un coussinet de glissement d'aiguille (31), au boitier de verrou d'aiguille (35), à la zone de l'aiguille d'aiguillage (32), au niveau de l'âme de rail (33) et/ou au niveau du patin de rail (34) de l'aiguillage.

22. Système de chauffage d'aiguillage avec une unité de transfert de chaleur (1), selon la revendication 21, **caractérisé en ce que** l'unité de transfert de chaleur (1) est montée à l'aide d'éléments déformables (36) au niveau des points d'appui sur l'aiguillage (3).
